# EUROPÄISCHE PATENTSCHRIFT

(11) **EP 0 996 668 B1**
(45) Veröffentlichungstag und Bekanntmachung des Hinweises auf die Patenterteilung: **13.10.2004**
(21) Anmeldenummer: 98940188.0
(22) Anmeldetag: 08.07.1998
(51) Int. Cl.: C08K 5/17, C09D 5/02, C08F 2/44, C08L 57/04, D04H 1/64, C08F 220/18

(54) **THERMISCH HÄRTBARE, WÄSSRIGE ZUSAMMENSETZUNGEN**
THERMOSETTING AQUEOUS COMPOSITIONS
COMPOSITIONS AQUEUSES THERMODURCISSABLES

(30) Priorität: 08.07.1997 DE 19729161
(43) Veröffentlichungstag der Anmeldung: 03.05.2000
(73) Patentinhaber: BASF AKTIENGESELLSCHAFT, 67056 Ludwigshafen (DE)
(72) Erfinder: RECK, Bernd, D-67269 Grünstadt (DE); DREHER, Stefan, D-67433 Neustadt (DE); BECKERLE, Wilhelm, Friedrich, D-67240 Bobenheim-Roxheim (DE); WISTUBA, Eckehardt, D-67098 Bad Dürkheim (DE); SEUFERT, Michael, D-67098 Bad Dürkheim (DE); ROSER, Joachim, D-68165 Mannheim (DE); TÜRK, Johannes, D-67459 Böhl-Iggelheim (DE)
(74) Vertreter: Kinzebach, Werner, Dr.
(86) Internationale Anmeldenummer: PCT/EP1998/004257
(87) Internationale Veröffentlichungsnummer: WO 1999/002591

(56) Entgegenhaltungen:
- EP-A- 0 475 166
- EP-A- 0 486 374
- EP-A- 0 735 061
- WO-A-97/31059
- WO-A-97/45461

## Beschreibung

Die vorliegende Erfindung betrifft thermisch härtbare, wässrige Zusammensetzungen, die eine carboxylgruppenhaltige Polymerisatkomponente sowie ein Amin, das mindestens eine lange kette mit wenigstens sechs kohlenstoffatomen umfasst, enthalten, und deren Verwendung als Bindemittel für Formkörper.

Die Verfestigung von flächenförmigen Fasergebilden, beispielsweise Faservliesen, Formkörpern wie Faserplatten oder Spanplatten, etc. erfolgt häufig auf chemischem Weg unter Verwendung eines polymeren Bindemittels. Zur Erhöhung der Festigkeit, insbesondere der Naß- und Wärmestandfestigkeit, werden vielfach Bindemittel eingesetzt, welche Formaldehyd abspaltende Vernetzer enthalten. Damit besteht aber die Gefahr von Formaldehydemissionen.

Zur Vermeidung von Formaldehydemissionen wurden bereits zahlreichen Alternativen zu den bisher bekannten Bindemitteln vorgeschlagen. So sind aus der US-A-4,076,917 Bindemittel bekannt, welche Carbonsäure- oder Carbonsäureanhydrid-haltige Polymerisate und β-Hydroxyalkylamide als Vernetzer enthalten. Das molare Verhältnis von Carboxylgruppen zu Hydroxylgruppen beträgt bevorzugt 1:1. Nachteilig ist die relativ aufwendige Herstellung der β-Hydroxyalkylamide.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren. Als hochmolekulare Polycarbonsäuren werden Polyacrylsäure, Copolymere aus Methylmethacrylat/n-Butylacrylat/Methacrylsäure und aus Methylmethacrylat/Methacrylsäure beschrieben. Als mehrwertige Alkohole bzw. Alkanolamine werden 2-Hydroxymethylbutan-1,4-diol, Trimethylolpropan, Glycerin, Poly(methylmethacrylat-co-hydroxypropylacrylat), Diethanolamin und Triethanolamin eingesetzt. Die Wasserfestigkeit der erhaltenen Platten ist jedoch nicht zufriedenstellend.

Aus der EP-A-583 086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen. Verwendung findet insbesondere Polyacrylsäure. Das Bindemittel enthält weiterhin ein Polyol, beispielsweise Glycerin, Bis-[N,N-Di(β-hydroxyethyl)adipamid, Pentaerythrit, Diethylenglykol, Ethylenglykol, Gluconsäure, β-D-Lactose, Sucrose, Polyvinylalkohol, Diisopropanolamin, 2-(2-Aminoethylamino)ethanol, Triethanolamin, Tris(hydroxymethylamino)methan und Diethanolamin. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden die β-Hydroxyalkylamide genannt.

Die EP-A-651 088 beschreibt entsprechende Bindemittel für Substrate aus Cellulosefaser. Diese Bindemittel enthalten zwingend einen phosphorhaltigen Reaktionsbeschleuniger.

Die EP-A-672 920 beschreibt formaldehydfreie Binde-, Imprägnieroder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Naßreißfestigkeiten erzielt. Im Rahmen von Vergleichsversuchen wurden auch aminhaltige Vernetzungsmittel und überwiegend linear aufgebaute Polyole getestet. Es wird darauf hingewiesen, dass aminhaltige Vernetzungsmittel flokkulierend wirken und dass die überwiegend linear aufgebauten Polyole zu schwächerer Vernetzung führen als die cyclischen Polyole.

Die DE-A-22 14 450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muß jedoch auf bis zu 300°C erhitzt werden.

Die EP-A-257 567 beschreibt eine Polymerzusammensetzung, die erhältlich ist durch Emulsionspolymerisation von ethylenisch ungesättigten Monomeren, wie Olefine, vinylaromatische Verbindungen, α,β-ethylenisch ungesättigte Carbonsäuren und deren Ester, ethylenisch ungesättigte Dicarbonsäureanhydride und Vinylhalogenide. Während der Polymerisation wird ein in Wasser oder Alkali lösliches oder dispergierbares Harz mit einem zahlenmittleren Molekulargewicht von etwa 500 bis etwa 20000 zugegeben, um die Fließeigenschaften der Polymerisatzusammensetzung zu beeinflussen. Das Harz ist aus Olefinen, vinylaromatischen Verbindungen, α,β-ethylenisch ungesättigten Carbonsäuren und den Estern davon oder ethylenisch ungesättigten Dicarbonsäureanhydriden aufgebaut. Als alkalisches Medium, in dem das erwähnte Harz löslich oder dispergierbar sein soll, wird Ammoniumhydroxid angegeben. Die Zusammensetzung ist zur Herstellung von formaldehydfreien Beschichtungen von Holzsubstraten brauchbar.

Die EP-A-576 128 beschreibt repulpierbare Klebstoffzusammensetzungen, die eine säurereiche Polymerkomponente und eine säurearme Polymerkomponente enthalten. Die säurearme Polymerkomponente basiert auf einem monomeren Gemisch von 40 bis 95% eines Alkylacrylats oder -methacrylats und 5 bis 60% einer ethylenisch ungesättigten Säure, wie Acrylsäure oder Methacrylsäure. Die säurearme Polymerkomponente basiert auf einem Monomergemisch aus 90 bis 100% eines Alkylacrylats oder Alkylmethacrylats und 0 bis 10% einer ethylenisch ungesättigten Säure. Die Herstellung der Zusammensetzung erfolgt durch wässrige Emulsionspolymerisation, wobei die säurereiche Polymerkomponente in Anwesenheit der säurearmen Polymerkomponente oder umgekehrt polymerisiert wird. Der pH der Zusammensetzung wird durch Zugabe von Ammoniumhydroxid oder Natriumhydroxid auf den gewünschten Wert eingestellt. Die Zusammensetzung ist als druckempfindlicher Klebstoff, Laminationsklebstoff, Klebstoff für textile Gewebe, Fliesen und Verpackungen und als Holzleim brauchbar.

Die US-A-5,314,943 beschreibt eine niedrigviskose, rasch härtende, formaldehydfreie Bindemittelzusammensetzung für Textilmaterialien. Die Zusammensetzung umfaßt einen Latex, bei dem es sich um ein Copolymer auf Basis einer vinylaromatischen Verbindung und eines konjugierten Diens handelt, und ein wasserlösliches Copolymer, welches durch Copolymerisation eines Gemisches aus wenigstens einer ethylenisch ungesättigten Polycarbonsäure und wenigstens einer olefinischen ungesättigten Monocarbonsäure erhalten wird. Der pH der Zusammensetzung wird Ammoniumhydroxid oder Natriumhydroxid auf 5 bis 9 eingestellt. Die Zusammensetzung wird als Bindemittel für Textilsubstrate eingesetzt.

Die US-A-4,868,016 beschreibt eine Zusammensetzung auf Basis von wenigstens einem thermoplastischen, in wässrigem alkalischem Medium unlöslichen Latexpolymer und wenigstens einem alkalilöslichen Polymer, das mit dem Latexpolymer nicht kompatibel ist. Das Latexpolymer ist ein in Wasser dispergiertes Polymer, das aus Acrylsäure- oder Methacrylsäureestern, vinylaromatischen Verbindungen und Vinylestern aufgebaut sein kann und zusätzlich 0,5 bis 3 Gew.-% einer ethylenisch ungesättigten Carbonsäure einpolymerisiert enthält. Auch das alkalilösliche Polymer ist aus den genannten Monomeren aufgebaut, enthält jedoch 10 bis 60 Gew.-% einer ethylenisch ungesättigten Carbonsäure. Zur Einstellung des pH-Wertes auf > 7 kann die Zusammensetzung Ammoniak, Triethylamin, Ethylamin oder Dimethylhydroxyethylamin enthalten. Sie ist dazu brauchbar, Substrate mit einem Überzug zu versehen.

Es ist bekannt, dass stabile wässrige (Meth)acrylatdispersionen durch Emulsionspolymerisation in Anwesenheit von Schutzkolloiden nur dann erhalten werden, wenn wenigstens 50 % Vinylacetat, bezogen auf Gesamtmonomere, einpolymerisiert werden. Bei weniger als 50 % Vinylacetat erfolgt Agglomeration. Die US 4,670,505 beschreibt zur Lösung dieses Problems eine Polyacrylatdispersion, die durch Emulsionspolymerisation in Anwesenheit von 0,1 bis 5 Gew.-% wenigstens eines wasserlöslichen Aminoalkohols mit 2 bis 36 Kohlenstoffatomen und 0,04 bis 5 Gew.-%, jeweils bezogen auf Gesamtmonomere, eines Schutzkolloids hergestellt wird. Die erhaltenen Latices besitzen geringe Viskosität und verbessertes Pigmentbindevermögen und sind im wesentlichen stippenfrei und scherstabil.

Der vorliegenden Erfindung liegt die Aufgabe zugrunde, formaldehydfreie Bindemittel für Formkörper zur Verfügung zu stellen, die ein rasches Härten bei niedriger Temperatur erlauben und dem Substrat Wasserfestigkeit verleihen.

Diese Aufgabe wird gelöst durch thermisch härtbare Zusammensetzungen, enthaltend mindestens ein Polymerisat (A1), das 0 bis 5 Gew.-% einer α,β-ethylenisch ungesättigten Mono- oder Dicarbonsäure einpolymerisiert enthält, und das erhältlich ist durch radikalische Polymerisation in Gegenwart von
a) wenigstens einem durch radikalische Polymerisation erhältlichen Polymerisat (A2), das 15 bis 100 Gew.-% einer α,β-ethylenisch ungesättigten Mono- oder Dicarbonsäure einpolymerisiert enthält, und
b) wenigstens einem Amin, das mindestens eine lange Kette mit wenigstens sechs Kohlenstoffatomen umfasst,
wobei das Gewichtsverhältnis (auf Feststoffbasis) von Polymerisat (A1) zu Polymerisat (A2) im Bereich von 7:1 bis 1:7 und das Gewichtsverhältnis von Polymerisat (A2) zu Amin mit langer Kette im Bereich von 20:1 bis 2:1 liegt.

Im Rahmen der vorliegenden Erfindung steht Alkyl vorzugsweise für geradkettige oder verzweigte C₁-C₁₈-Alkylreste, insbesondere C₁-C₁₂- und besonders bevorzugt C₁-C₆-Alkylreste, wie Methyl, Ethyl, n-Propyl, i-Propyl, n-Butyl, sek.-Butyl, tert.-Butyl, n-Pentyl, n-Hexyl, 2-Ethylhexyl, n-Dodecyl oder n-Stearyl.

Hydroxyalkyl steht vorzugsweise für Hydroxy-C₁-C₆-alkyl und insbesondere für 2-Hydroxyethyl und 2- oder 3-Hydroxypropyl.

Cycloalkyl steht vorzugsweise für C₅-C₇-Cyclohexyl, insbesondere Cyclopentyl und Cyclohexyl.

Aryl steht vorzugsweise für Phenyl oder Naphthyl.

### Polymerisat (A1):

Zur Herstellung des Polymerisates A1 können alle durch radikalische Polymerisation polymerisierbaren Monomeren eingesetzt werden. Im Allgemeinen ist das Polymerisat A1 aufgebaut aus:
60 bis 100 Gew.-Teilen, bezogen auf Gesamtgewicht der Monomere für das Polymerisat A1, wenigstens eines einpolymerisierbaren Monomers (Hauptmonomer),
0 bis 35 Gew.-Teile, vorzugsweise 0 bis 20 Gew.-Teile, wenigstens eines funktionellen Monomers (Comonomer) und
0 bis 5 Gew.-Teile, vorzugsweise 0 bis 3 Gew.-Teile, einer α,β-ungesättigten Mono- oder Dicarbonsäure, vorzugsweise 0 bis 3 Gew.-%.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäuren, wie Acrylsäure, Methacrylsäure, Maleinsäure, Fumarsäure und Itaconsäure, mit im allgemeinen C₁-C₁₂-, vorzugweise C₁-C₈- und insbesondere C₁-C₄-Alkanolen.
   Derartige Ester sind insbesondere Methyl-, Ethyl-, n-Butyl-, Isobutyl-, tert.-Butyl- und 2-Ethylhexylacrylat und -methacrylat;
- vinylaromatischen Verbindungen, wie Styrol, α-Methylstyrol, o-Chlorstyrol oder Vinyltoluole;
- Vinylestern von C₁-C₁₈-Mono- oder -Dicarbonsäuren, wie Vinylacetat, Vinylpropionat, Vinyl-n-butyrat, Vinylaurat und Vinylstearat;
- Butadien.

Besonders bevorzugte Hauptmonomere sind Methylmethacrylat, Methylacrylat, n-Butylmethacrylat, t-Butylmethacrylat, Ethylacrylat, n-Butylacrylat, 2-Ethylhexylacrylat, Styrol und Vinylacetat.

Geeignete Comonomere sind insbesondere:
- Lineare 1-Olefine, verzweigtkettige 1-Olefine oder cyclische Olefine, wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten. Vorzugsweise ist jedoch kein Ethen oder kein lineares 1-Olefin in das Polymerisat einpolymerisiert.
- Acrylnitril, Methacrylnitril.
- Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann, wie z.B. Methylvinylether, Ethylvinylether, Propylvinylether, Isobutylvinylether, 2-Ethylhexylvinylether, vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.
- Acrylamide und alkylsubstituierte Acrylamide, wie z.B. Acrylamid, Methacrylamid, N-tert.-Butylacrylamid, N-Methyl-(meth)acrylamid.
- Sulfogruppenhaltige Monomere, wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen sowie Sulfopropylacrylat, Sulfopropylmethacrylat.
- C₁- bis C₄-Hydroxyalkylester von C₃- bis C₆-Mono- oder Dicarbonsäuren (siehe oben), insbesondere der Acrylsäure, Methacrylsäure oder Maleinsäure, oder deren mit 2 bis 50 Mol Ethylenoxid, Propylenoxid, Butylenoxid oder Mischungen davon alkoxylierte Derivate, oder Ester von mit 2 bis 50 Mol Ethylenoxid, Propylenoxid, Butylenoxid oder Mischungen davon alkoxylierten C₁- bis C₁₈-Alkoholen mit den erwähnten Säuren (Monomere b₆), wie z.B. Hydroxyethyl-(meth)acrylat, Hydroxypropyl(meth) acrylat, Butandiol-1,4-monoacrylat, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.
- Vinylphosphonsäure, Vinylphosphonsäuredimethylester u.a. phosphorhaltige Monomere.
- Alkylaminoalkyl(meth)acrylate oder Alkylaminoalkyl(meth)acrylamide oder deren Quaternisierungsprodukte, wie z.B. 2-(N,N-Dimethylamino)ethyl(meth)acrylat, 3-(N,N-Dimethyl-amino)-propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.
- Allylester von C₁- bis C₃₀-Monocarbonsäuren.
- N-Vinylverbindungen, wie N-Vinylformamid, N-Vinyl-N-methylformamid, N-Vinylpyrrolidon, N-Vinylimidazol, 1-Vinyl-2-methylimidazol, 1-Vinyl-2-methyl-imidazolin, N-Vinylcaprolactam, Vinylcarbazol. 2-Vinylpyridin, 4-Vinylpyridin.
- Diallyldimethylammoniumchlorid, Vinylidenchlorid, Vinylchlorid, Acrolein, Methacrolein.
- 1,3-Diketogruppen enthaltende Monomere wie z. B. Acetoacetoxyethyl(meth)acrylat oder Diacetonacrylamid, harnstoffgruppenhaltige Monomere, wie Ureidoethyl(meth)acrylat, Acrylamidoglykolsäure, Methacrylamidoglykolatmethylether.
- Silylgruppen enthaltende Monomere wie z. B. Trimethoxysilylpropylmethacrylat.
- Glycidylgruppen enthaltende Monomere wie z. B. Glycidylmethacrylat.

Besonders bevorzugte Comonomere sind Hydroxyethylacrylat, Hydroxypropylacrylat, Hydroxybutylacrylat, Hydroxyethylmethacrylat. Ganz besonders bevorzugt sind Hydroxyethylacrylat und Hydroxyethylmethacrylat, insbesondere in Mengen von 2 bis 20 Gew.-%, bezogen auf Gesamtmonomere A1.

Bei den α,β-ethylenisch ungesättigten Mono- und Dicarbonsäuren handelt es sich insbesondere um solche mit 3 bis 6 Kohlenstoffatomen. Beispiele hierfür sind Acrylsäure, Methacrylsäure, Crotonsäure, Fumarsäure, Maleinsäure, 2-Methylmaleinsäure oder Itaconsäure sowie Halbester von ethylenisch ungesättigten Dicarbonsäuren, wie Maleinsäuremonoalkylester von C₁-C₈-Alkanolen.

Die Polymerisate können nach üblichen Polymerisationsverfahren hergestellt werden. Für alle Polymerisationsmethoden werden die üblichen Apparaturen verwendet, z.B. Rührkessel, Rührkesselkaskaden, Autoklaven, Rohrreaktoren und Kneter.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z. B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im allgemeinen in Mengen von 0,05 bis 5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure - und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Die Herstellung des Polymerisats A1 erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, Isopropanol, n-Butanol, Aceton oder Methylethylketon, bis zu einem Anteil von etwa 30 Vol.-% enthalten sein. Es entsteht eine stabile, feinteilige Polymerisatdispersion. Die Teilchengrößen können nach den für wässrige Emulsionspolymerisate üblichen Verfahren bestimmt werden. Zum Beispiel liegen die mittels quasielastischer Lichtstreuung bestimmten Teilchengrößen im Allgemeinen im Bereich von 30 bis 1500 nm, vorzugsweise 40 bis 500 nm. Die Teilchengrößenverteilung kann monomodal oder polymodal sein.

Bevorzugt wir die Herstellung des Polymerisates A1 nur mit dem säurereichen Polymerisat A2 und dem langkettigen Amin als einzigen, die entstehenden Dispersionsteilchen stabilisierenden Agentien durchgeführt. Das Polymerisat A2 und das langkettige Amin bilden ein polymeres Ammoniumsalz, welches die Stabilisierung der entstehenden Polymerteilchen bzw. Polymertröpfchen bewirkt und so zu koagulatarmen und stabilen Polymerisatdispersionen führt.

Ohne das säurereiche Polymerisat A2 erhält man Polymerdispersionen, die eine unzureichende Wasserfestigkeit und eine geringe Wärmestandfestigkeit aufweisen. Weglassen des langkettigen Amins führt in vielen Fällen zu Koagulation des Polymerisationsansatzes.

Zusätzlich zu der Stabilisierung durch das Polymerisat A2 und das langkettige Amin können bei der Herstellung von A1 jedoch auch grenzflächenaktive Hilfsstoffe wie Emulgatoren oder Schutzkolloide zugesetzt werden.

Typischerweise verwendet man hierzu Emulgatoren oder Schutzkolloide. Es kommen anionische, nichtionische, kationische und amphotere Emulgatoren in Betracht. Bevorzugt sind anionische Emulgatoren, beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäure-ethoxilate, Alkanolamidethoxilate, EO/PO-Blockcopolymere und Alkylpolyglucoside verwendet werden. Als kationische bzw. amphotere Emulgatoren werden z.B. verwendet: quaternisierte Aminoalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2 und Polyvinyl-2-methylimidazolin.

Die Emulgatoren oder Schutzkolloide werden üblicherweise in Konzentrationen von weniger als 5 Gew.-%, bezogen auf die Monomere, eingesetzt. Vorzugsweise arbeitet man ohne Emulgatoren oder Schutzkolloide.

Die Monomere können vor oder während der Polymerisation ganz oder teilweise durch übliche, anorganische oder organische Basen neutralisiert werden. Geeignete Basen sind z.B. Alkali- oder Erdalkaliverbindungen, wie Natrium-, Kalium- oder Calciumhydroxid, Natriumcarbonat, Ammoniak und primäre, sekundäre oder tertiäre Amine, wie Di- oder Triethanolamin.

Besonders bevorzugt wird vor und während der Polymerisation nicht neutralisiert. Bevorzugt wird auch nach der Polymerisation kein Neutralisierungsmittel, abgesehen von dem gegebenenfalls zugegebenen Alkanolamin, zugesetzt.

Die Durchführung der Polymerisation kann in üblicher Weise nach einer Vielzahl von Varianten kontinuierlich oder diskontinuierlich erfolgen.

Bei Anwendung des beschriebenen Polymerisatverfahrens in Anwesenheit eines Polymerisats (A2) und des Amins mit langer Kette erhält man Polymerisate (A1) mit einem gewichtsmittleren Molekulargewicht von 1000 bis 5 000 000, vorzugsweise 5000 bis 2 000 000. Ein in einfacher Weise zugängliches Maß für das mittlere Molekulargewicht eines Polymerisates ist dessen K-Wert. Der K-Wert ist eine relative Viskositätszahl, die in Analogie zu DIN 53726 bestimmt wird. Er beinhaltet die Fließgeschwindigkeit des reinen Lösungsmittels relativ zur Fließgeschwindigkeit einer Lösung des Polymerisates A2 in diesem Lösungsmittel. Ein hoher K-Wert entspricht dabei einem hohen mittleren Molekulargewicht (vergl. Cellulosechemie , Vol. 13, 1932, S. 58-64 und Kirk-Othmer, Encyclopedia of Chemical Technology, Vol. 23, S. 967-968). Die K-Werte liegen im allgemeinen im Bereich von 15 bis 150 (1 gew.-%ig in Dimethylformamid). Die Emulsionspolymerisation kann so durchgeführt werden, dass der Feststoffvolumengehalt im Bereich von 20 bis 70 %, vorzugsweise 30 bis 60 % liegt.

Das Polymerisat (A2) ist zu 15 bis 100 Gew.-%, vorzugsweise 20 bis 100 Gew.-%, insbesondere 40 bis 100 Gew.-% und besonders bevorzugt 60 bis 100 Gew.-% aus mindestens einer α,β-ethylenisch ungesättigten Mono- oder Dicarbonsäure aufgebaut. Das Polymerisat kann auch teilweise oder vollständig in Form eines Salzes vorliegen, bevorzugt ist die saure Form. Vorzugsweise ist das Polymerisat, in der sauren Form >10g/l (bei 25 °C) in Wasser löslich.

Das gewichtsmittlere Molekulargewicht des Polymerisats (A2) ist größer als 500 und im allgemeinen kleiner als 5 Millionen. Die K-Werte der Polymerisate (nach H. Fikentscher, Cellulose-Chemie 13 (1932), S. 58-64, 71 und 74), die ein Maß für das Molekulargewicht darstellen, liegen im allgemeinen im Bereich von 10 bis 150 (gemessen in 1 gew.-%iger wässriger Lösung). Das Polymerisat weist im Mittel im allgemeinen mindestens 4 Carbonsäuregruppen oder davon abgeleitete Salzgruppen pro Polymerkette auf.

Brauchbare ethylenisch ungesättigte Carbonsäuren wurden bereits oben im Zusammenhang mit Polymerisat (A1) genannt. Besonders bevorzugt sind Maleinsäure enthaltende Polymerisate wie z. B. Copolymere aus Maleinsäure und Acrylsäure. Die Polymerisate können auch ausgehend von ethylenisch ungesättigten Mono- oder Dicarbonsäureanhydriden, gegebenenfalls im Gemisch mit den erwähnten Carbonsäuren, erhalten werden. Die Anhydridfunktionen werden unter den Polymerisationsbedingungen, beispielsweise bei der Lösungsoder Emulsionspolymerisation im wässrigen Medium oder im Anschluß an die Polymerisation durch Umsetzung mit einer Säure oder Base in Carbonsäuregruppen überführt. Brauchbare ethylenisch ungesättigte Carbonsäureanhydride sind insbesondere Maleinsäureanhydrid, Itaconsäureanhydrid, Acrylsäureanhydrid und Methacrylsäureanhydrid.

Neben den Mono- oder Dicarbonsäuren kann das Polymerisat (A2) noch 0 bis 85 Gew.-%, vorzugsweise 0 bis 80 Gew.-%, insbesondere 0 bis 60 Gew.-% und besonders bevorzugt 0 bis 40 Gew.-% mindestens eines weiteren Monomers einpolymerisiert enthalten. Brauchbare Monomere wurden bereits oben im Zusammenhang mit Polymerisat (A1) genannt. Bevorzugt sind Methylmethacrylat, n-Butylmethacrylat, t-Butylmethacrylat, Methylacrylat, Ethylacrylat, n-Butylacrylat, 2-Ethylhexylacrylat, Styrol, Acrylamid, Acrylnitril, Vinylacetat.

Die Durchführung der Polymerisation und Hilfsstoffe wurden bereits oben im Zusammenhang mit Polymerisat ((A1)) beschrieben.

Zusätzlich zu den oben im Zusammenhang mit Polymerisat (A1) genannten Polymerisationsverfahren können die Polymerisate (A2) auch durch Lösungspolymerisation erhalten werden.

Bei Anwendung der wässrigen radikalischen Lösungspolymerisation erhält man wasserlösliche Polymere und Copolymere A2, vorzugsweise ausgehend von 50 bis 100 Gew.-% der erwähnten Carbonsäuren, Carbonsäureanhydride, Halbester oder einer Mischung von zwei oder mehreren dieser Verbindungen. Ihr gewichtsmittleres Molekulargewicht liegt im allgemeinen im Bereich von 500 bis 1 000 000, vorzugsweise 2000 bis 200 000. Die K-Werte der Polymerisate liegen im allgemeinen im Bereich von 10 bis 150, vorzugsweise 12 bis 100 (gemessen in 1 gew.-%iger Lösung in Wasser). Der Feststoffgehalt liegt im allgemeinen im Bereich von 10 bis 80 Gew.-%, vorzugsweise 20 bis 65 Gew.-%. Die Polymerisation kann bei Temperaturen von 20 bis 300, vorzugsweise von 60 bis 200°C durchgeführt werden. Die Durchführung der Lösungspolymerisation erfolgt in üblicher Weise, z.B. wie in der EP-A-75 820 oder DE-A-36 20 149 beschrieben.

Das Polymerisat (A2) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE-A-4 003 172 und EP-A-116 930 beschrieben.

Die Herstellung des Polymerisates A2 kann auch in einer zweistufigen Fahrweise unmittelbar vor der Herstellung des Polymerisates A1 im selben Reaktionsgefäß erfolgen.

Bei dem Amin mit langer Kette handelt es sich vorzugsweise um ein Amin der Formel

R^{x}NR^{y}R^{z}

worin R^{x} für C₆-C₂₂-Alkyl, C₆-C₂₂-Alkenyl, Aryl-C₆-C₂₂-Alkyl oder Aryl-C₆-C₂₂-Alkenyl steht, wobei der Alkenylrest 1 bis 3 Doppelbindungen aufweisen kann,
R^{y} und R^{z}, die gleich oder verschieden sein können, für H, (̵CH₂CH₂O)̵ₙH, wobei n für 1 bis 25 steht, oder C₅-C₇-Cycloalkyl stehen, das gegebenenfalls durch wenigstens eine Hydroxylgruppe substituiert ist, oder die für R^{x} angegebenen Bedeutungen besitzen oder zusammen für einen 5- bis 7-gliedrigen Ring stehen, der gegebenenfalls wenigstens ein weiteres Heteroatom aufweisen kann, das ausgewählt ist unter O, N und S.

Bevorzugte Reste R^{x} sind solche mit 8 bis 22 Kohlenstoffatomen. Insbesondere ist das Amin mit langer Kette ausgewählt unter Verbindungen der obigen Formel, worin R^{x} für C₆-C₂₂-Alkyl oder C₆-C₂₂-Alkenyl (mit vorzugsweise 1 oder 2 Doppelbindungen) steht und R^{y} und R^{z}, die gleich oder verschieden sind, für H oder (̵CH₂CH₂O)̵ₙH steht. n steht vorzugsweise für 1 bis 20, insbesondere 1 bis 10.

Geeignete langkettige Amine sind beispielsweise die von der Firma AKZO unter der Bezeichnung "Ethomeen" vertriebenen ethoxylierten Amine, wie z. B. Ethomeen C/15, ein Polyoxyethylen-(5)-cocoamin oder Ethomeen S/12, ein Oleylbis(2-hydroxyethyl)amin oder Ethomeen T/25, ein Polyoxyethylen-(15)-tallowamin.

Derartige Produkte sind auch von anderen Herstellern verfügbar. Als weitere Beispiele seien an dieser Stelle genannt Lutensol FA 12 von der Firma BASF, ein Polyoxoethylen-(12)-oleylamin oder Noramox 0.7 von der Firma Pierrefitte-Auby, ein Polyoxyethylen-(7)-oleylamin.

Bevorzugt sind ethoxylierte langkettige Mono- und Diamine. Für die Herstellung der erfingungsgemäßen Zusammensetzungen können jedoch auch andere langkettige primäre, sekundäre oder tertiäre aliphatische Amine verwendet werden. Beispiele hierfür sind die von der Firma AKZO vertriebenen Produkte Armeen DMOD (Oleyldimethylamin), Armeen M2C (Dicocomethylamin), Armeen NCMD (N-Cocomorpholin), Armeen 2C (Dicocoamin) oder Armeen 12D (n-Dodecylamin).

Gewünschtenfalls kann die Zusammensetzung auch mindestens ein Alkanolamin mit wenigstens zwei Hydroxylgruppen enthalten. Die Zugabe des Alkanolamins bewirkt eine schnellere Härtung der erfindungsgemäßen Zusammensetzungen bei gegebener Härtungstemperatur bzw. eine Aushärtung bei niedrigerer Temperatur bei vorgegebener Härtungszeit. Weiterhin verbessert die Zugabe eines Alkanolamins die Filmbildung der Zusammensetzung.

Als Alkanolamine sind solche der Formel geeignet: 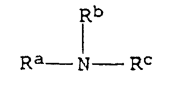 in der R^{a} für ein H-Atom, eine C₁-C₅-Alkylgruppe oder eine C₁-C₁₀-Hydroxyalkylgruppe steht und R^{b} und R^{c} für eine C₁-C₁₀-Hydroxyalkylgruppe stehen.

Besonders bevorzugt stehen R^{b} und R^{c} unabhängig voneinander für eine C₂-C₅-Hydroxyalkylgruppe und R^{a} für ein H-Atom, eine C₁-C₅-Alkylgruppe oder eine C₂-C₅-Hydroxyalkylgruppe.

Als Alkanolamine seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Weiterhin geeignet sind Alkanolamine, die ausgewählt sind unter wasserlöslichen, linearen oder verzweigten aliphatischen Verbindungen, die pro Molekül wenigstens zwei funktionelle Aminogruppen vom Typ (a) oder vom Typ (b) 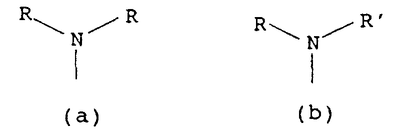 worin R für Hydroxyalkyl steht und R' für Alkyl steht, enthalten. Dabei handelt es sich vorzugsweise um mindestens eine Verbindung der Formel I: 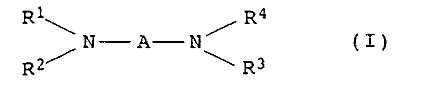 worin
- A: für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert ist, wobei R⁶ und R⁷ die oben angegebenen Bedeutungen besitzen, steht;
oder A für einen Rest der Formel steht: 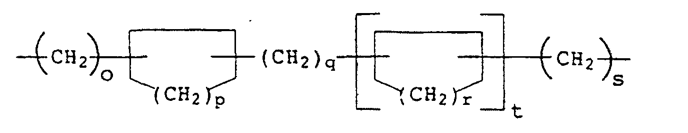 worin
o, q und s unabhängig voneinander für 0 oder eine ganze Zahl von 1 bis 6 stehen,
p und r unabhängig voneinander für 1 oder 2 stehen und
t für 0,1 oder 2 steht,
wobei die cycloaliphatischen Reste auch durch 1, 2 oder 3 Alkylreste substituiert sein können und
- R¹, R² und R³ und R⁴: unabhängig voneinander für H, Hydroxyalkyl, Alkyl oder Cycloalkyl stehen, wobei die Verbindungen pro Molekül mindestens zwei, vorzugsweise mindestens drei Hydroxyalkylgruppen aufweisen.

### Besonders bevorzugt sind:

### (1) Verbindungen der Formel Ia

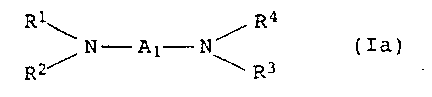

worin
- A₁: für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
- R¹, R², R³ und R⁴: unabhängig voneinander für Hydroxyalkyl oder H stehen oder einer der Reste R¹ und R² und/oder einer der Reste R³ und R⁴ für Alkyl oder Cycloalkyl steht.

Besonders brauchbare Verbindungen dieses Typs sind die Verbindungen der folgenden Formeln: 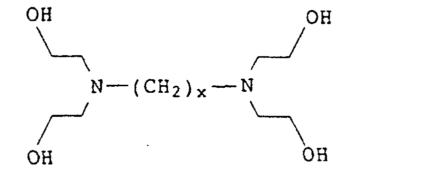 worin x für 2 bis 12, insbesondere 2, 3, 6, 8, 10 oder 12 steht, 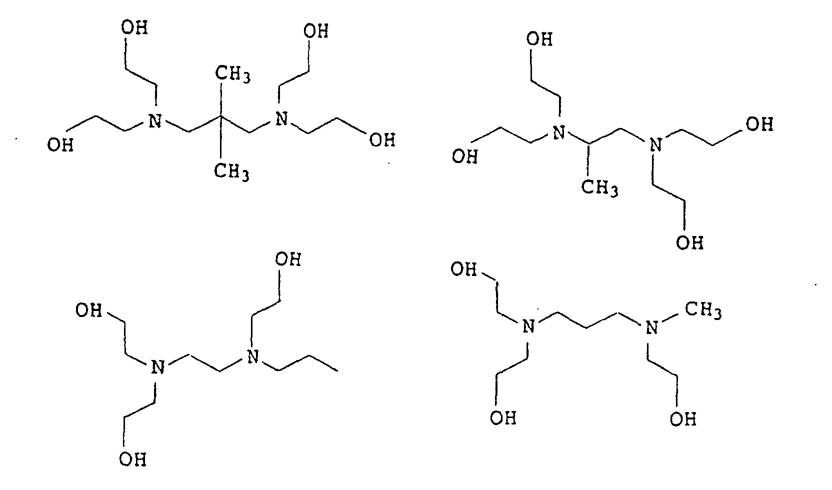 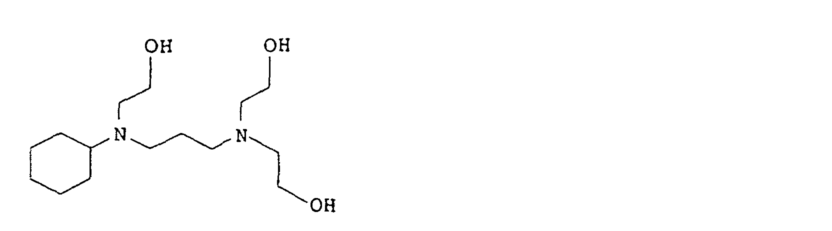 Verbindungen der Formel Ia sind auch die Aminale der Formel

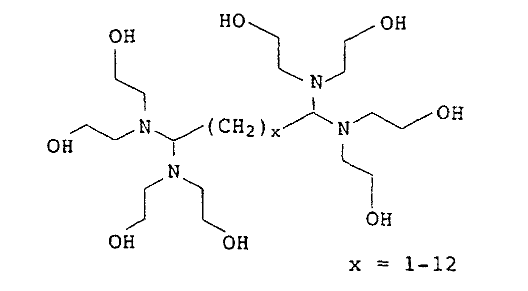

### (2) Verbindungen der Formel Ib

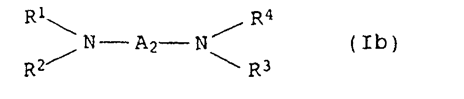

worin
- A₂: für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
- R¹, R², R³ und R⁴: unabhängig voneinander für Hydroxyalkyl oder H stehen.

vorzugsweise ist der Rest A₂ durch ein oder zwei Gruppen NR⁵ unterbrochen. Besonders brauchbare Verbindungen dieses Typs sind die Verbindungen der folgenden Formeln:

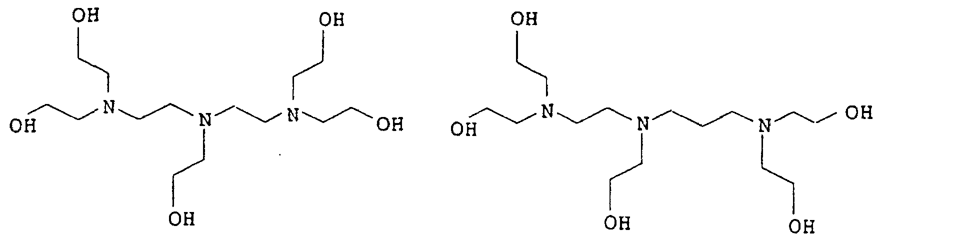

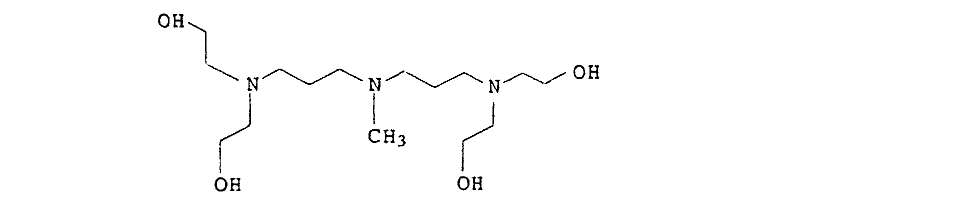

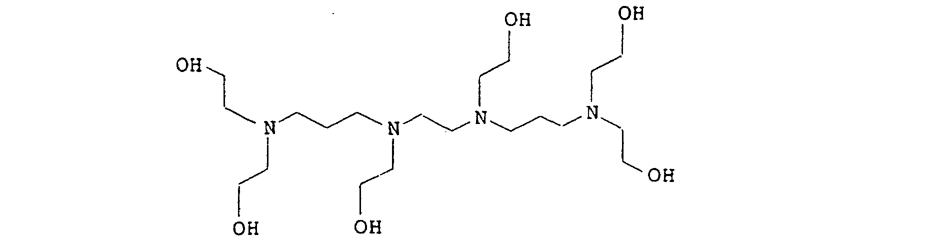

### (3) Verbindungen der Formel Ic:

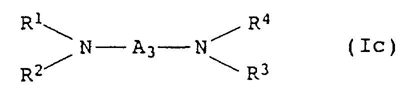

worin
- A₃: für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
- R¹, R², R³ und R⁴: unabhängig voneinander für Alkyl stehen, das gegebenenfalls durch mindestens eine NR⁵-Gruppe unterbrochen und/oder durch mindestens eine NR⁶R⁷-Gruppe substituiert ist,
- R⁵: für H, Hydroxyalkyl oder -R⁸NR⁶R⁷ steht und
- R⁶ und R⁷: unabhängig voneinander für H, Hydroxyalkyl oder -R⁸NR⁶R⁷ stehen,
- R⁸: für einen Ethylen- oder Propylenrest steht,
wobei (durchschnittlich) wenigstens 30%, insbesondere > 60% und bevorzugt > 80% der (hydroxyalkylierbaren) N-Atome eine Hydroxyalkylgruppe tragen.

Vorzugsweise ist die C₂-C₈-Alkylengruppe durch mindestens zwei Gruppen NR⁵ unterbrochen. Besonders brauchbare Verbindungen dieses Typs sind Umsetzungsprodukte von Ethylenoxid mit Polyethyleniminen verschiedener Molekulargewichte mit mehreren Strukturelementen NR⁶R⁷ und NR⁵. Brauchbare Polyethylenimine sind solche, deren gewichtsmittleres Molekulargewicht im Bereich von 400 bis 2 000 000 liegt. Die nachfolgende schematische Formel soll die Verbindung dieses Typs erläutern: 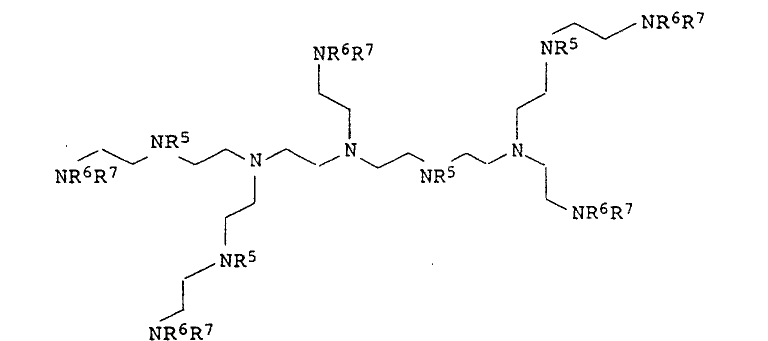 worin
R⁵ für H, Hydroxyethyl oder -R⁸NR⁶R⁷ steht und R⁶ und R⁷ für H, Hydroxyethyl oder -R⁸NR⁶R⁷ und R⁸ für (CH₂)₂ steht, wobei im Mittel > 40%, insbesondere > 60% und besonders bevorzugt > 80% der ethoxilierbaren NH-Funktionen des Polyethylenimins mit Ethylenoxid umgesetzt sind.

### (4) Verbindungen der Formel Ie

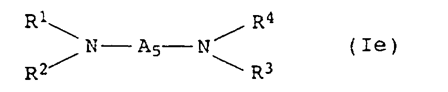

worin
- A₅: für C₆-C₁₈-Alkylen steht, das durch mindestens eine NR⁵-Gruppe unterbrochen ist, wobei R⁵ für (CH₂)ₙNR⁶R⁷ oder Alkyl steht, das gegebenenfalls durch wenigstens eine NR⁵-Gruppe, worin R⁵ für (CH₂)ₙR⁶R⁷ oder Alkyl steht, unterbrochen und/oder durch mindestens eine NR⁶R⁷-Gruppe substituiert ist,
- n: für 2 oder 3 steht und
- R¹, R², R³, R⁴, R⁶ und R⁷: unabhängig voneinander für Hydroxyalkyl oder H stehen.

Besonders brauchbare Verbindungen dieses Typs sind Polyamine der Formeln:

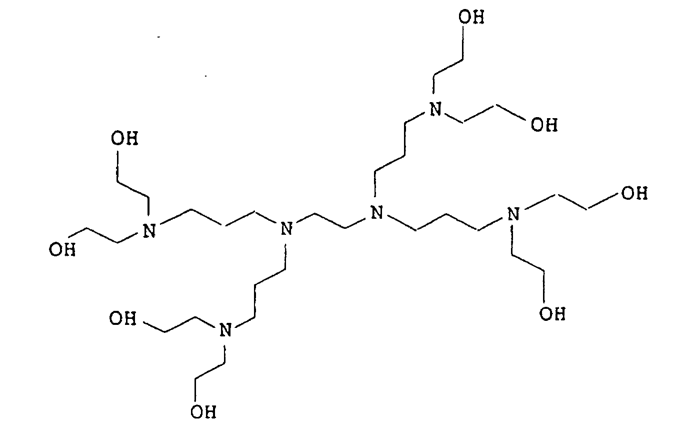

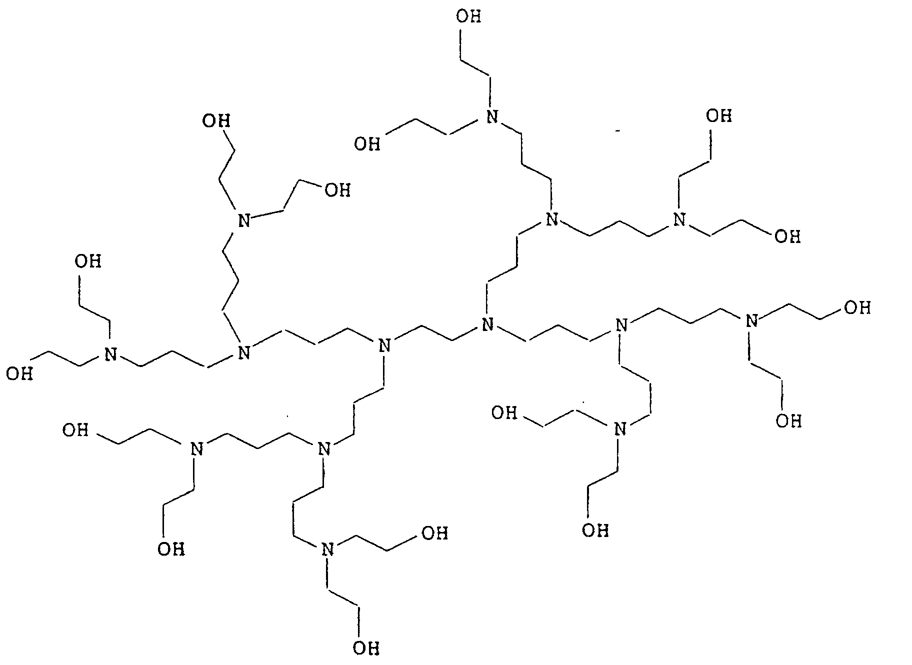

### (5) Verbindungen der Formel If

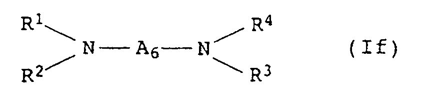

worin
- A₆: für C₂-C₁₂-Alkylen steht, das durch mindestens ein Sauerstoffatom unterbrochen ist und
- R¹, R², R³ und R⁴: unabhängig voneinander für Hydroxyalkyl oder H stehen.

Vorzugsweise ist die Alkylenkette durch 1, 2 oder 3 Sauerstoffatome unterbrochen. Besonders brauchbare Verbindungen dieses Typs sind die Verbindungen folgender Formeln:

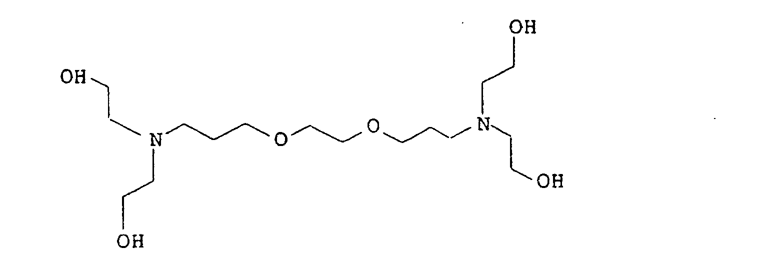

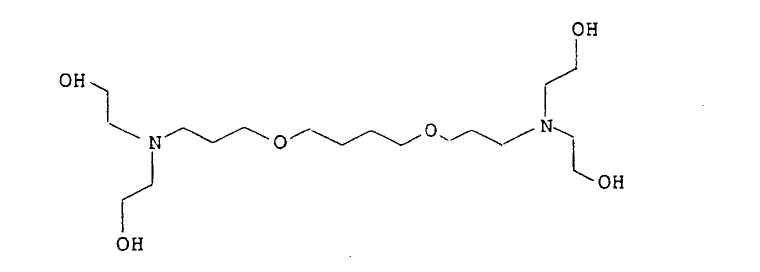

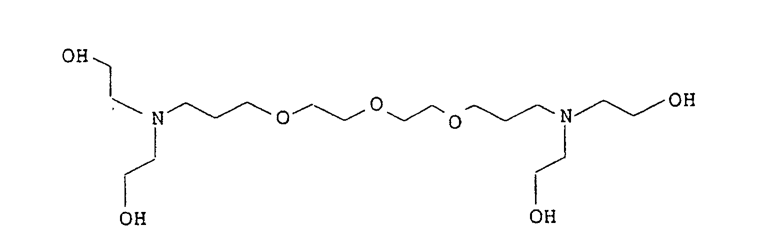

### (6) Verbindungen der Formel Ig,

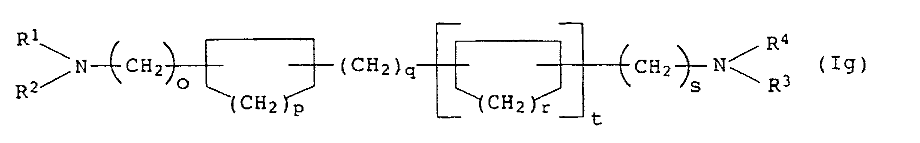

worin
o, q und s unabhängig voneinander für 0 oder eine ganze Zahl im Bereich von 1 bis 6 stehen;
p und r unabhängig voneinander für 1 oder 2 stehen und
t für 0,1 oder 2 steht,
wobei die cycloaliphatischen Ringe auch durch 1, 2 oder 3 Alkylreste substituiert sein können, und
R¹, R², R³ und R⁴ unabhängig voneinander für Hydroxyalkyl oder H stehen.

Besonders brauchbare Verbindungen dieses Typs sind

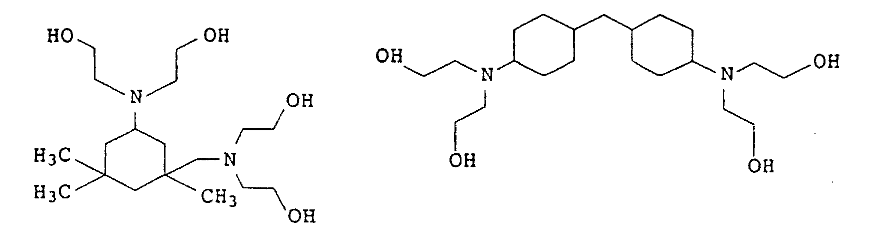

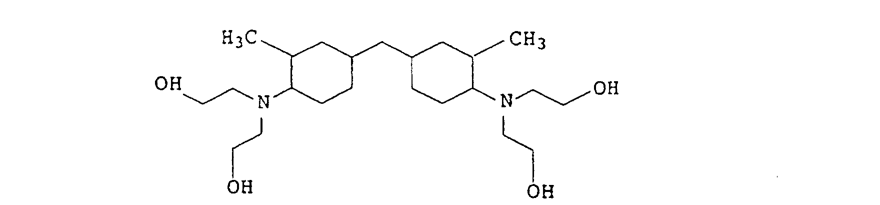

### (7) Polyalkanolamine, die erhältlich sind durch Kondensation von Di- oder Trialkanolaminen mit sich selbst oder untereinander, gegebenenfalls in Gegenwart von ein- bzw. mehrwertigen Alkoholen oder ein- bzw. mehrwertigen Aminen.

Ein Beispiel für derartige oligomere oder polymere Verbindungen ist das aus Triethanol hergestellte Kondensationsprodukt, das idealisiert durch folgende schematische Formel wiedergegeben wird:

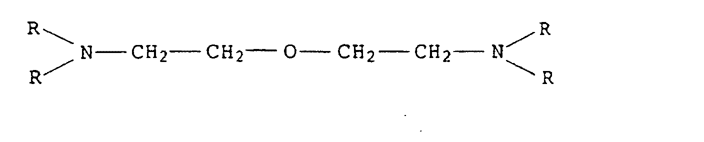

R = ―CH₂―CH₂―OH

oder

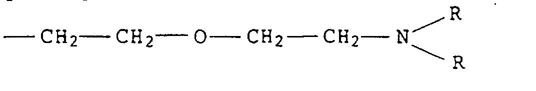

Die Verbindungen der Formeln Ia, Ib (ausgenommen die erwähnten Aminale), Ic, Id, Ie, If und Ig können durch Umsetzung der entsprechenden Polyamine mit Alkylenoxiden hergestellt werden.

Die Umsetzung von Aminen mit Alkylenoxiden, insbesondere Ethylenoxid und Propylenoxid, zu den entsprechenden Alkanolaminen ist im Prinzip bekannt. Hierzu werden die Amine in Anwesenheit eines Protonendonors - im allgemeinen Wasser - mit den Alkylenoxiden, vorzugsweise bei Temperaturen zwischen 30 und 120°C, unter Normaldruck oder unter erhöhtem Druck, vorzugsweise bei 1 bis 5 bar, umgesetzt, indem pro zu oxalkylierender N-H-Funktion etwa ein Äquivalent des Alkylenoxids eingesetzt wird. Zur möglichst vollständigen Oxalkylierung kann ein geringer Überschuß an Alkylenoxid verwendet werden, vorzugsweise setzt man aber die stöchiometrische Menge oder sogar einen leichten Unterschuß des Alkylenoxids gegenüber den N-H-Funktionen ein. Die Oxalkylierung kann mit einem Alkylenoxid oder mit einem Gemisch von zwei oder mehreren Alkylenoxiden erfolgen. Wahlweise kann die Alkoxylierung mit zwei oder mehr Alkylenoxiden auch nacheinander erfolgen.

Außer Wasser kommen als Katalysatoren auch Alkohole oder Säuren in Frage, bevorzugt ist aber Wasser (zur Oxalkylierung von Aminen vgl. N.Schönfeld, Grenzflächenaktive Ethylenoxid-Addukte, S. 29-33, Wissenschaftliche Verlagsgesellschaft mbH, Stuttgart 1976 bzw. S.P. McManus et al., Synth. Comm. 3, 177 (1973)).

Die als Katalysator und/oder Lösemittel eingesetzte Wassermenge kann je nach Anforderung und Bedarf schwanken. Bei flüssigen, niedrigviskosen Aminen reichen Wassermengen zwischen 1 und 5 % aus, um die Reaktion zu katalysieren. Feste, hochviskose oder polymere Amine setzt man vorteilhaft in Wasser gelöst oder dispergiert um; die Wassermenge kann dann zwischen 10 und 90 % betragen.

Unter den beschriebenen Bedingungen für die Oxalkylierung in Gegenwart von Wasser werden im wesentlichen nur die -NH-Gruppen umgesetzt. Eine Oxalkylierung der entstehenden OH-Gruppen findet in der Regel nicht statt, so dass im wesentlichen eine Monoalkoxylierung der NH-Gruppen abläuft (d.h. pro mol NH wird maximal 1 mol Alkylenoxid addiert).

Der mittlere Alkoxylierungsgrad der aktiven NH-Gruppen ist bei Verbindungen mit weniger als 5 Stickstoffatomen pro Molekül vorzugsweise > 75%.

Als Ausgangspolyamine kann man beispielsweise verwenden α,ω-Oligomethylendiamine, wie 1,2-Ethylendiamin, 1,3-Propandiamin, 1,6-Hexamethylendiamin, 1,8-Octamethylendiamin, 1,12-Dodecamethylendiamin, 2,2-Dimethyl-1,3-propandiamin, 1,2-Propandiamin, 2-(Ethylamino)ethylamin, 2-(Methylamino)-propylamin, N-(2-Aminoethyl)-1,2-ethanediamin, N-(2-Aminoethyl)-1,3-propandiamin, N-(2-Aminoethyl)-N-methylpropanediamin, N,N-Bis-(3-Aminopropyl)-ethylendiamin, 4-Aminoethyl-1,8-octandiamin, 2-Butyl-2-ethyl-1,5-pentandiamin, 2,2,4-Trimethylhexamethylendiamin, 2-Methylpentamethylendiamin, 1,3-Diaminopentan, 3-Isopropylaminopropylamin, Triethylenetetramin oder Tetraethylenpentamin.

Oligo- und Poly-N-(β-hydroxyethyl)aminoverbindungen (Aminale) können auch durch Kondensation von aliphatischen Dialdehyden und Diethanolamin hergestellt werden.

Zu Poly-N-(β-hydroxyethyl)aminoverbindungen (8) gelangt man, wie beispielsweise in der US-A-4,505,839 und der DE-A-3 206 459 beschrieben, durch thermische Kondensation von Triethanolamin zu Poly(triethanolamin) oder durch thermische Kondensation von Alkanolaminen zu hydroxylgruppenhaltigen Polyethern. Die Kondensation der Alkanolamine kann auch, wie in DE-A-1 243 874 beschrieben, in Gegenwart ein- bzw. mehrwertiger primärer oder sekundärer Amine oder ein- bzw. mehrwertiger Alkohole erfolgen. Je nach Kondensationsbedingungen kann das Molekulargewicht dieser Produkte und damit ihre Viskosität im breiten Rahmen variiert werden.

Die gewichtsmittleren Molekulargewichte dieser Polykondensate liegen üblicherweise zwischen 200 und 100 000.

Die Verbindungen der Formeln Ie können durch Alkoxylierung aus sogenannten Dendrimer-Polyaminen hergestellt werden, deren Synthese durch Michael-Addition von aliphatischen Diaminen an Acrylnitril und anschließende katalytische Hydrierung in der WO 93/14147 beschrieben ist. Ein Beispiel hierfür ist das hydrierte Addukt von 4 mol Acrylnitril und Ethylendiamin. Dieses Hexamin mit 4 primären Aminogruppen kann auf analoge Weise weiter umgesetzt werden zu dem N-14-Amin mit 8 primären Aminogruppen. Anstelle von Ethylendiamin können auch andere aliphatische Diund Polyamine eingesetzt werden.

Auch Aminogruppen enthaltende Polymere, wie Polyethylenimin, lassen sich zu den Verbindungen der Formel Ic mit Ethylenoxid in wässriger Lösung zu brauchbaren Poly-N-(β-hydroxyethyl)aminoverbindungen umsetzen, wobei der Umsetzungsgrad der vorhandenen NH-Funktionen im allgemeinen > 40%, insbesondere > 60% und bevorzugt > 80% ist. Die Herstellung von Polyethylenimin ist allgemein bekannt. Polyethylenimine im Molekulargewichtsbereich M_{w} = 800 bis 2 000 000 sind beispielsweise von der Fa. BASF unter der Bezeichnung Lupasol® erhältlich. Polyethylenimine bestehen in der Regel aus verzweigten Polymerketten und enthalten daher primäre, sekundäre und tertiäre Aminogruppen. Deren Verhältnis liegt üblicherweise bei ca. 1:2:1. Bei sehr niedrigen Molekulargewichten sind jedoch auch höhere Anteile primärer Aminogruppen möglich. Auch weitgehend lineare Polyethylenimine, die über spezielle Herstellverfahren zugänglich sind, sind für diese Anwendung geeignet.

Polymere Alkylenimine mit primären und/oder sekundären Aminogruppen, die nach Oxalkylierung in den erfindungsgemäßen Zusammensetzungen verwendet werden können, sind beschrieben in "Encyclopedia of Polymer Science and Engineering", H. Mark (Editor), Revised Edition, Volume 1, S. 680-739, John Wiley & Sons Inc., New York, 1985;

Es ist auch möglich, Hydroxyalkyl-substituierte Polyalkylenimine durch Polymerisation von N-Hydroxyalkylazisidinen herzustellen.

Weiterhin können auch oxalkylierte Allylamin-Polymere und -Copolymere in den erfindungsgemäßen Zusammensetzungen verwendet werden.

Die Verbindungen der Formel If lassen sich ausgehende von Oxaminen, wie 4,7-Dioxadecan-1,10-diamin, 4,9-Dioxadecan-1,12-diamin, 4,11-Dioxatetradecan-1,14-diamin, 4,9-Dioxadodecan-1,12-diamin, 4,7,10-Trioxatridecan-1,13-diamin herstellen. Geeignete Ausgangsamine sind auch Polyoxyalkylenamine, die von der Fa. Huntsman unter der Bezeichnung Jeffamine® vertrieben werden. Beispiele hierfür sind die Diamine, Jeffamine D-230, Jeffamine-D-400, Jeffamine D-2000, Jeffamine D-4000, Jeffamine ED-600, Jeffamine ED-900, Jeffamine ED-2001, Jeffamine EDR-148 sowie die Triamine Jeffamine T-403, Jeffamine T-3000 und Jeffamine T-5000.

Umsetzungsprodukte von aromatischen Polyaminen mit Alkylenoxid sind prinzipiell auch für die Verwendung in den erfindungsgemäßen Zusammensetzungen geeignet.

Die Polymerisate (A1) und (A2) werden vorzugsweise in einem Gewichtsverhältnis eingesetzt, das im Bereich von 5:1 bis 1:5 und besonders bevorzugt 3:1 bis 1:3, liegt (bezogen auf nichtflüchtige Anteile).

Das Gewichtsverhältnis von Polymerisat (A2) zu Amin mit langer Kette liegt im Bereich von 20:1 bis 2:1 (bezogen auf nichtflüchtige Anteile), bevorzugt 10:1 bis 3:1.

Das Gewichtsverhältnis von Polymerisat (A2) zu Alkanolamin (wenn vorhanden) liegt vorzugsweise im Bereich von 100:1 bis 1:1, insbesondere 50:1 bis 2:1 und besonders bevorzugt 30:1 bis 2,5:1 (jeweils bezogen auf nichtflüchtige Anteile).

Besonders bevorzugt sind folgende Mengenverhältnisse:
40-60 Gew.-Teile Polymerisat (A1)
20-40 Gew.-Teile Polymerisat (A2)
6-10 Gew.-Teile Amin mit langer Kette, und gegebenenfalls
0-15 Gew.-Teile Alkanolamin.

Bevorzugt wird das Alkanolamin zu der erfindungsgemäßen Zusammensetzung nach der Herstellung zugegeben. Dabei kann das Alkanolamin in unverdünnter Form oder als wässrige Lösung zugegeben werden. Es ist jedoch auch möglich, die Herstellung der erfindungsgemäßen Zusammensetzung in Gegenwart eines Alkanolamins durchzuführen.

Der pH-Wert der erfindungsgemäßen Zusammensetzungen liegt im Bereich von 0 bis 9, bevorzugt 0,5 bis 6, besonders bevorzugt 1 bis 4. Niedrige pH-Werte begünstigen die thermische Aushärtung der Zusammensetzungen.

Die Viskosität der erfindungsgemäßen wässrigen Zusammensetzungen liegt bei einem Gehalt von aktiven Inhaltsstoffen von 40 Gew.-% im allgemeinen im Bereich von 10 bis 100 000 mPa.s, gemessen in einem Rotationsviskosimeter gemäß DIN 53019 bei 23°C und einer Schergeschwindigkeit von 250 sec⁻¹. Bevorzugt sind Viskositäten von 20 bis 20000 mPa.s, besonders bevorzugt von 30 bis 5000 mPa.s.

Die erfindungsgemäßen Zusammensetzungen haben einen Gehalt an nichtflüchtigen Anteilen im Bereich von 20 bis 75 Gew.-%, bevorzugt 40 bis 70 Gew.-%.

Die erfindungsgemäßen Zusammensetzungen können einen Reaktionsbeschleuniger enthalten, vorzugsweise jedoch liegen sie ohne einen derartigen Reaktionsbeschleuniger vor. Geeignete Reaktionsbeschleuniger sind z.B. Alkalimetallhypophosphite, -phosphite, - polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Weiterhin sind als Katalysatoren geeignet starke Säuren wie z.B. Schwefelsäure, p-Toluolsulfonsäure. Auch polymere Sulfonsäuren, wie z.B. Poly(acrylamido-2-methylpropansulfonsäure), Poly(vinylsulfonsäure), Poly(p-styrolsulfonsäure), Poly(sulfopropylmethacrylat) und polymere Phosphonsäuren wie z.B. Poly(vinylphosphonsäure) sowie davon abgeleitete Copolymere mit den oben beschriebenen Comonomeren sind geeignet.

Es ist weiterhin möglich, die beschleunigend wirkenden Sulfonsäuren oder Phosphonsäuren in das säurehaltige Polymerisat (A2) einzubauen, indem man die entsprechenden Monomere wie z.B. Acrylamido-2-methylpropansulfonsäure, vinylsulfonsäure, p-Styrolsulfonsäure, Sulfopropylmethacrylat oder Vinylphosphonsäure bei der Herstellung der polymeren Carbonsäuren als Comonomer verwendet.

Weiterhin als Katalysatoren geeignet sind Organotitanate und Organzirkonate wie z.B. Triethanoltitanat, Titanchelat ETAM und Tetrabutylzirkonat, die z.B. von der Fa. Hüls vertrieben werden.

Weiter können die erfindungsgemäßen Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Zusammensetzungen übliche Brandschutzmittel, wie z.B. Aluminiumsilikate, Aluminiumhydroxide, Borate und/oder Phosphate enthalten.

Häufig enthalten die Zusammensetzungen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die erfindungsgemäßen Zusammensetzungen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die erfindungsgemäßen Zusammensetzungen sind formaldehydfrei. Formaldehydfrei bedeutet, dass die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die erfindungsgemäßen thermisch härtbaren, formaldehydfreien Zusammensetzungen sind bei der Anwendung im wesentlichen unvernetzt und daher thermoplastisch. Wenn erforderlich, kann jedoch ein geringer Grad an Vorvernetzung eingestellt werden, z. B. durch Verwendung von Monomeren mit zwei oder mehr polymerisierbaren Gruppen.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z.B. die Vernetzung durch Knüpfung von kovalenten Bindungen zwischen den verschiedenen Bestandteilen der Zusammensetzungen, Bildung von ionischen Wechselwirkungen und Clustern, Bildung von Wasserstoffbrücken. Weiterhin können bei der Härtung auch physikalische Veränderungen im Bindemittel ablaufen, wie z.B. Phasenumwandlungen oder Phaseninversion.

Die Härtungstemperaturen liegen zwischen 75 und 250 °C, bevorzugt zwischen 90 und 200 °C, besonders bevorzugt zwischen 100 und 180 °C. Die Dauer und die Temperatur der Erwärmung beeinflussen den Aushärtungsgrad. Ein Vorteil der erfindungsgemäßen Zusammensetzungen ist, dass ihre Härtung bei vergleichsweise niedrigen Temperaturen erfolgen kann.

Die Aushärtung kann auch in zwei oder mehr Stufen erfolgen. So kann z.B. in einem ersten Schritt die Härtungstemperatur und - zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Die Zusammensetzungen werden insbesondere als Bindemittel für die Herstellung von Formkörpern aus Fasern, Schnitzeln oder Spänen verwendet. Dabei kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Kenaf, Bananenfasern, Hanf und Kork genannt. Besonders bevorzugt sind Holzfasern oder Holzspäne.

Die Formkörper haben bevorzugt eine Dichte von 0,2 bis 1,4 g/cm³ bei 23°C.

Als Formkörper kommen insbesondere Platten und Formteile mit unregelmäßiger Kontur in Betracht. Ihre Dicke beträgt im allgemeinen mindestens 1 mm, vorzugsweise mindestens 2 mm, ihre Oberfläche beträgt typischerweise 200 bis 200000 cm². In Betracht kommen insbesondere Automobilinnenteile, z.B. Türinnenverkleidungen, Armaturenträger, Hutablagen.

Die Gewichtsmenge des verwendeten Bindemittels beträgt im allgemeinen 0,5 bis 40 Gew.-%, vorzugsweise 1 bis 30 Gew.-% (Bindemittel fest), bezogen auf das Substrat (Fasern, Schnitzel oder Späne).

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise (insbesondere bei der Herstellung von Formkörpern aus Holzfasern oder Holzspänen) auf 10 bis 10 000, besonders bevorzugt auf 50 bis 5 000 und ganz besonders bevorzugt auf 100 bis 2500 mPa·s (DIN 53019, Rotationsviskosimeter bei 250 sec⁻¹) eingestellt.

Die Mischung aus Fasern, Schnitzeln und Spänen und dem Bindemittel kann z.B. bei Temperaturen von 10 bis 150°C vorgetrocknet werden und anschließend zu den Formkörpern, z.B. bei Temperaturen von 50 bis 250°C, vorzugsweise 100 bis 240°C und besonders bevorzugt 120 bis 225°C und Drücken von im allgemeinen 2 bis 1000 bar, vorzugsweise 10 bis 750 bar, besonders bevorzugt 20 bis 500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z.B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das GewichtsVerhältnis Bindemittel fest:Holzspäne vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 120 bis 225°C durch Anwendung von Drücken von üblicherweise 10 bis 750 bar zu einer Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 10 bis 50 bar zu Platten oder Formkörpern verpreßt.

Die beleimten Holzfasern können auch, wie z.B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Auch andere Naturfaserstoffe wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Bevorzugt haben die mit den erfindungsgemäßen Bindemitteln imprägnierten Substrate beim Verpressen einen Restfeuchtegehalt von 3-20 Gew.-%, bezogen auf das zu bindende Substrat.

Die erfindungsgemäß erhaltenen Formkörper haben eine geringe Wasseraufnahme, eine niedrige Dickenquellung nach Wasser lagerung, eine gute Festigkeit und sind formaldehydfrei.

Außerdem kann man die erfindungsgemäßen Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2000 mm.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten der erfindungsgemäßen Zusammensetzung sind in der Beschichtungsmasse im allgemeinen in einer Menge von 1 bis 65 Gew.-% enthalten. Der Anteil der inerten Füllstoffe liegt im allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann auf die frisch hergestellten, noch heißen anorganischen Fasern aufgesprüht. Das Wasser verdampft dann weitgehend und die Zusammensetzung bleibt im wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200°C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das erfindungsgemäße Bindemittel vorzugsweise im Gewichtsverhältnis Faser/Bindemittel (fest) von 10:1 bis 1:1, besonders bevorzugt von 6:1 bis 3:1 auf das Rohfaservlies z.B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC.

Bei der Verwendung als Dachbahnen werden die gebundenen Faservliese im allgemeinen mit Bitumen beschichtet.

Aus den erfindungsgemäßen wässrigen Zusammensetzungen lassen sich weiterhin geschäumte Platten oder Formkörper herstellen. Dazu wird zunächst das in der Zusammensetzung enthaltene Wasser bei Temperaturen von < 100°C bis zu einem Gehalt von < 20 Gew.-% entfernt. Die so erhaltene viskose Zusammensetzung wird dann bei Temperaturen > 100°C, vorzugsweise bei 120 bis 300°C, verschäumt. Als Treibmittel kann z.B. das in der Mischung noch enthaltene Restwasser und/oder die bei der Härtungsreaktion entstehenden gasförmigen Reaktionsprodukte dienen. Es können jedoch auch handelsübliche Treibmittel zugesetzt werden. Die entstehenden vernetzten Polymerschäume können beispielsweise zur Wärmedämmung und zur Schallisolierung eingesetzt werden.

Mit den erfindungsgemäßen Zusammensetzungen lassen sich durch Imprägnierung von Papier und anschließende schonende Trocknung nach den bekannten Verfahren sogenannte Laminate, z.B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die erfindungsgemäßen Zusammensetzungen können weiterhin zur Herstellung von Schleifpapier und Schleifkörpern nach den üblicherweise mit Phenolharz als Bindemittel durchgeführten Herstellverfahren verwendet werden. Bei der Herstellung von Schleifpapieren wird auf ein geeignetes Trägerpapier zunächst eine Schicht der erfindungsgemäßen Bindemittel als Grundbinder aufgetragen (zweckmäßigerweise 10 g/m²). In den feuchten Grundbinder wird die gewünschte Menge an Schleifkorn eingestreut. Nach einer Zwischentrocknung wird eine Deckbinderschicht aufgetragen (z. B. 5 g/m²). Das auf diese Weise beschichtete Papier wird anschließend zur Aushärtung noch 5 Min. lang bei 170 °C getempert.

Über die Zusammensetzung des Polymerisates A1 kann die Härte und Flexibilität der Zusammensetzung auf das gewünschte Niveau eingestellt werden.

Die erfindungsgemäßen Zusammensetzungen sind weiterhin geeignet als formaldehydfreie Kernsandbindemittel zur Herstellung von Gußformen und Kernen für den_Metallguß nach den üblichen Verfahren.

Die nachfolgenden Beispiele erläutern die Erfindung.

Die nichtflüchtigen Anteile wurden in einem Umluft-Trockenschrank bestimmt aus dem Gewichtsverlust einer lg Probe, die zwei Stunden lang bei 120 °C getrocknet wurde.

Die Viskosität der Zusammensetzungen wurde in einem Rheomat der Fa. Physica bei einer Schergeschwindigkeit von 250 sec⁻¹ gemäß DIN 53019 bei 23 °C bestimmt.

Der K-Wert der Polymere A2 wurde in 1 %iger wässriger Lösung bestimmt.

Die Bestimmung der gewichtsmittleren Teilchengröße der erfindungsgemäßen Polymerisate erfolgte nach der Methode der quasielastischen Lichtstreuung. Dazu wurden die erfindungsgemäßen Zusammensetzungen mit einer 2 %igen Natriumlaurylsulfat-Lösung auf einen Feststoffgehalt von 0,01 Gew.-% verdünnt und mittels eines Autosizers 2C der Fa. Malvern vermessen.

### Beispiel 1:

In einem 4 l Glasgefäß mit Ankerrührer (120 Upm) wurden 510 g Wasser, 960 g einer 50 Gew.-%igen wässrigen Lösung eines Copolymerisates, aufgebaut aus 50 Gewichtsteilen Acrylsäureeinheiten und 50 Gewichtsteilen Maleinsäureeinheiten (pH-Wert 0,8 ; K-Wert = 12), 300g einer 40 Gew-%igen wässrigen Lösung von ethoxylierten Oleylmonoamin (mittlerer Ethoxylierungsgrad = 12) vorgelegt. Bei einer Innentemperatur von 85 °C wurden 5 Gew.-% der Gesamtmenge eines Zulauf 1 und 10 Gew.-% der Gesamtmenge eines Zulauf 2 zugegeben. Die Reaktionsmischung wurde 10 min bei 85 °C anpolymerisiert. Anschließend wurden bei 85 °C innerhalb von 3h die Restmenge von Zulauf 1 und innerhalb von 3,5h die Restmenge von Zulauf 2 räumlich getrennt kontinuierlich zugeführt. Das so hergestellte Polymerisat enthält 49,8 % nichtflüchtige Anteile und hat einen pH-Wert von 1,6. Die Teilchengröße beträgt 58 nm.

| | | |
|---|---|---|
| Zulauf 1 | 400g | Styrol |
| | 360g | Methylmethacrylat |
| | 40g | Acetacetoxyethylmethacrylat |
| Zulauf 2 | 200g | Wasser |
| | 8g | Natriumperoxodisulfat |

### Beispiel 2:

| | | |
|---|---|---|
| Vorlage | 1200g | Wasser |
| | 950g | Sokalan PM 10S (Fa. BASF), einer 50%igen Lösung eines Maleinsäurecopolymeren (pH-Wert = 2, K-Wert = 10) |
| | 300g | einer 40 Gew.-%igen wässrigen Lösung von ethoxyliertem Oleylmonoamin (mittlerer Ethoxylierungsgrad = 12) |
| Zulauf 1 | 400g | Styrol |
| | 360g | Methylmethacrylat |
| | 40g | Hydroxyethylacrylat |
| Zulauf 2 | 200g | Wasser |
| | 8g | 2,2'-Azobis(2-amidinopropan)dihydrochlorid |

Fahrweise wie Beispiel 1. Die erhaltene Zusammensetzung wird mit 25 Gew.-%iger wässriger Ammoniak-Lösung auf pH-Wert 4,0 gestellt. Sie enthält 39,4% nichtflüchtige Anteile

### Beispiel 3:

| | | |
|---|---|---|
| Vorlage | 420g | Wasser |
| | 960g | der 50 Gew.-%igen wässrigen Copolymerisatlösung aus Beispiel 1 |
| Zulauf 1 | 400g | Wasser |
| | 300g | einer 40 Gew.-%igen wässrigen Lösung von ethoxyliertem Oleylmonoamin (mittlerer Ethoxylierungsgrad = 12) |
| | 400g | Styrol |
| | 400g | Methylmethacrylat |
| Zulauf 2 | 200g | Wasser |
| | 8g | 2,2'-Azobis(2-amidinopropan)dihydrochlorid |

Fahrweise wie Beispiel 1. Dabei wurde der Zulauf 1, bei dem es sich um eine Emulsion handelt, ständig mit 100 Upm gerührt.
Das so hergestellte Polymerisat enthält 45,4% nichtflüchtige Anteile und hat einen pH-Wert von 1,9. Die Teilchengröße beträgt 142 nm.

### Beispiel 4:

| | | |
|---|---|---|
| Vorlage | 10g | Wasser |
| | 960g | der 50 Gew.-%igen wässrigen Copolymerisatlösung aus Beispiel 1 |
| | 300g | einer 40 Gew.-%igen wässrigen Lösung von ethoxyliertem Oleylmonoamin (mittlerer Ethoxylierungsgrad = 12) |
| Zulauf 1 | 400g | Styrol |
| | 360g | Methylmethacrylat |
| | 40g | Hydroxyethylacrylat |
| | | |
| Zulauf 2 | 200g | Wasser |
| | 8g | Natriumperoxodisulfat |

### Fahrweise wie Beispiel 1.

Das so hergestellte Polymerisat enthält 59,9% nichtflüchtige Anteile und einen pH-Wert von 1,5. Die Teilchengröße beträgt 112 nm.

### Beispiel 5:

Zu 1000 g der Polymerdispersion aus Beispiel 4 wurde bei Raumtemperatur unter Rühren eine Mischung aus 60 g Triethanolamin und 60 g Wasser zugegeben.

Die so hergestellte Abmischung enthält 58,8 % nichtflüchtige Anteile und hat einen pH-Wert von 3,4.

### Beispiel 6:

| | | |
|---|---|---|
| Vorlage | 1260g | Wasser |
| | 960g | der 50 Gew.-%igen wässrigen Copolymerisatlösung aus Beispiel 1 |
| | 300g | einer 40 Gew.-%igen wässrigen Lösung von ethoxyliertem Oleylmonoamin (mittlerer Ethoxylierungsgrad = 12) |
| Zulauf 1 | 600g | Styrol |
| | 200g | Methylmethacrylat |
| | 40g | Hydroxyethylacrylat |
| | | |
| Zulauf 2 | 200g | Wasser |
| | 8g | 2,2'-Azobis(2-amidinopropan)dihydrochlorid |

### Fahrweise wie Beispiel 1.

Das so hergestellte Polymerisat enthält 40,3% nichtflüchtige Anteile. Es hat einen pH-Wert von 1,6 und eine viskosität von 120 mPas. Die Teichengröße beträgt 75 nm.

### Beispiel 7

| | | |
|---|---|---|
| Vorlage | 1200g | Wasser |
| | 960g | der 50 Gew.-%igen wässrigen Copolymerisatlösung aus Beispiel 1 |
| | 300g | einer 40 Gew.-%igen wässrigen Lösung von ethoxyliertem Oleylmonoamin (mittlerer Ethoxylierungsgrad = 12) |
| Zulauf 1 | 400g | n-Butylacrylat |
| | 76g | Styrol |
| | 24g | Methacrylsäure |
| Zulauf 2 | 200g | Wasser |
| | 8g | Natriumperoxodisulfat |

### Fahrweise wie Beispiel 1.

Das so hergestellte Polymerisat enthält 40,2% nichtflüchtige Anteile, es hat einen pH-Wert von 1,8 und eine viskosität von 140 mPas. Die Teilchengröße beträgt 64 nm.

### Beispiel 8

Zu 1000 g der Polymerdispersion aus Beispiel 7 wurde bei Raumtemperatur unter Rühren eine Mischung aus 63 g einer 77 Gew.-%igen wässrigen Lösung von ethoxyliertem Diethylentriamin (mittlerer Ethoxylierungsgrad = 4,6) und 50 g Wasser gegeben.

Die so hergestellte Abmischung enthält 45,4% nichtflüchtige Anteile, der pH-Wert ist 3,1.

### Beispiel 9

| | | |
|---|---|---|
| Vorlage | 790g | Wasser |
| | 960g | einer 50Gew.-%igen Lösung von Polyacrylsäure (pH-Wert =1.2 , K-Wert = 80 ) |
| | 200g | einer 40 Gew.-%igen wässrigen Lösung von ethoxyliertem Oleylmonoamin (mittlerer Ethoxylierungsgrad = 12) |
| Zulauf 1 | 240g | Styrol |
| | 560g | Ethylacrylat |
| Zulauf 2 | 200g | Wasser |
| | 8g | 2,2'-Azobis(2-amidinopropan)dihydrochlorid |

### Fahrweise wie Beispiel 1.

Das so hergestellte Polymerisat enthält 39,3% nichtflüchtige Anteile, hat einen pH-Wert von 2,2.und eine Viskosität von 920 mPas. Die Teilchengröße beträgt 269 nm.

### Beispiel 10

| | | |
|---|---|---|
| Vorlage | 300g | Wasser |
| | 13mg | Eisen(II)-sulfat |
| | 7g | Mercaptoethanol |
| Zulauf 1 | 235g | Acrylsäure |
| Zulauf 2 | 50g | Wasser |
| | 12g | einer 30 Gew.-%igen wässrigen Wasserstoffperoxidlösung |

Bei 60 °C Temperatur wurden Zulauf 1 und Zulauf 2 innerhalb 1,5 Stunden gleichzeitig zudosiert. Nach Zulauf-Ende wurde 1 Stunde bei 60 °C nachgerührt.

Zu der so hergestellten Polymerlösung (K-Wert = 27) wurden

| | |
|---|---|
| 880g | Wasser |
| 75g | einer 40 Gew.-%igen wässrigen Lösung von ethoxylierten Oleylmonoamin (mittlerer Ethoxylierungsgrad = 12) |

gegeben. Diese Mischung wurde auf 85 °C aufgeheizt. Anschließend wurden bei einer Innentemperatur von 85 °C 5 Gew.-% der Gesamtmenge eines Zulauf 3 und 10 Gew.-% der Gesamtmenge eines Zulaufs 4 zugegeben. Die Reaktionsmischung wurde 10 min bei 85 °C anpolymerisiert. Anschließend wurden bei 85 °C innerhalb von 3h die Restmenge von Zulauf 3 und innerhalb von 3,5h die Restmenge von Zulauf 4 räumlich getrennt kontinuierlich zugeführt.

| | | |
|---|---|---|
| Zulauf 3 | 200g | Styrol |
| | 180g | Methylmethacrylat |
| | 560g | Hydroxyethylacrylat |
| Zulauf 4 | 200g | Wasser |
| | 4g | 2,2'-Azobis(2-amidinopropan)dihydrochlorid |

Das so hergestellte Polymerisat enthält 29,4% nichtflüchtige Anteile und hat einen pH-Wert von 1,6.

### Beispiel 11

| | | |
|---|---|---|
| Vorlage | 520g | Wasser |
| | 960g | der 50 Gew.-%igen wässrigen Copolymerisatlösung aus Beispiel 1 |
| | 300g | einer 40 Gew.-%igen wässrigen Lösung von ethoxyliertem Oleylmonoamin (mittlerer Ethoxylierungsgrad = 12) |
| Zulauf 1 | 400g | Styrol |
| | 384g | Ethylacrylat |
| | 16g | Dynasylan MEMO ( Lieferant Fa. Hüls, chemische Bezeichnung 3-Methacryloxopropyl-trimethoxysilan) |
| Zulauf 2 | 200g | Wasser |
| | 8g | 2,2'-Azobis(2-amidinopropan)dihydrochlorid |

### Fahrweise wie Beispiel 1.

Das so hergestellte Polymerisat enthält 48,9% nichtflüchtige Anteile, einen pH-Wert von 1,7.

### Vergleichsbeispiel V1 (Zusammensetzung ohne Polymerisat A2)

| | | |
|---|---|---|
| Vorlage | 520g | Wasser |
| | 300g | einer 40 Gew.-%igen wässrigen Lösung von ethoxyliertem Oleylmonoamin (mittlerer Ethoxylierungsgrad = 12) |
| | 10g | 85 Gew.-%iger wässriger Phosphorsäure |
| Zulauf 1 | 400g | Styrol |
| | 360g | Methylmethacrylat |
| | 40g | Hydroxyethylacrylat |
| Zulauf 2 | 200g | Wasser |
| | 8g | 2,2'-Azobis(2-amidinopropan)dihydrochlorid |

### Fahrweise wie Beispiel 1.

Das so hergestellte Polymerisat enthält 49,5% nichtflüchtige Anteile, einen pH-Wert von 4,0. Der versuch hat eine Teilchengröße von 77 nm.

### Vergleichsbeispiel V2 (Zusammensetzung ohne langkettiges Amin)

| | | |
|---|---|---|
| Vorlage | 580g | Wasser |
| | 960g | der 50 Gew.-%igen wässrigen Copolymerisatlösung aus Beispiel 1 |
| Zulauf 1 | 400g | Styrol |
| | 360g | Ethylacrylat |
| | 40g | Hydroxyethylacrylat |
| Zulauf 2 | 200g | Wasser |
| | 8g | 2,2'-Azobis(2-amidinopropan)dihydrochlorid |

### Fahrweise wie Beispiel 1.

Im Verlauf der Polymerisation kam es zu starker Koagulatbildung. Es wurde keine stabile Polymerdispersion erhalten.

### A) Prüfung als Bindemittel für Naturfasermatten

Bindemittel aus den angegebenen Beispielen werden durch Zugabe von Wasser auf 25% nichtflüchtige Anteile verdünnt.

Eine Fasermatte aus einem 1:1 Gemisch von Jute- und Sisalfasern (mittleres Flächengewicht 1200 g/m2, Restfeuchtegehalt 7%, Hersteller Braunschweiger Jute- und Flachs Industriebetriebs-GmbH) werden mittels einer Foulard-Walze mit der 25 %igen Bindemittelflotte imprägniert, so dass bezogen auf das trockene Fasergewicht, 25 Gew.-% nichtflüchtige Bindemittelanteile aufgebracht werden.

Die imprägnierten Fasermatten (35 x 30cm) werden in einem Umlufttrockenschrank bei 80 °C auf einen Restfeuchtegehalt von 10 %, bezogen auf trockene Fasern, getrocknet und mit einer hydraulischen Presse bei einer Preßtemperatur von 200 °C und einem Preßdruck von 1,5 N/mm² zwei Minuten verpresst.

Die Biegefestigkeit (BF) wird mittels Dreipunkt-Biegeversuch nach DIN 52352, bei verschiedenen Prüftemperaturen (23, 60 und 100 °C) gemessen.

Die Dickenquellung (DQ) wird bestimmt als relative Zunahme der Dicke von 2x2cm großen Stücken der verpressten Fasermatten nach 2h bzw. 24h Lagerung in Wasser bei 23 °C.

Klimabeständigkeit: 3x10cm große Stücke der verpressten Fasermatten werden in einem Klimaschrank bei 80 °C und 90 % relativer Feuchte 1 bzw. 7 Tage gelagert. Die Festigkeit und die Abnahme der Festigkeit der Prüfkörper wird dann relativ zueinander mit Noten bewertet (Note 1 = sehr hohe Festigkeit bis Note 5 = sehr geringe Festigkeit)

| | | 1 | 2 | 3 | 4 | 6 | V1 |
|---|---|---|---|---|---|---|---|
| Plattendicke | (mm) | 1,72 | 1,45 | 1,65 | 1,51 | 1,50 | 1,41 |
| Dichte | (g/cm3) | 0,68 | 0,80 | 0,68 | 0,78 | 0,78 | 0,82 |
| BF 23 °C | (N/mm2) | 24 | 39 | 31 | 42 | 35 | 42 |
| BF 60 °C | (N/mm2) | 18 | 29 | 19 | 32 | 18 | 19 |
| BF100 °C | (N/mm2) | 12 | 23 | 12 | 19 | 16 | 7 |
| DQ 2h | (%) | 22 | 21 | 18 | 22 | 23 | 84 |
| DQ 24h | (%) | 28 | 24 | 24 | 25 | 31 | 100 |
| vor Klimalag. | (Note) | 1 | 1 | 1-2 | 1 | 1 | 2 |
| Klimalag. 1d | (Note) | 1 | 1 | 2 | 1-2 | 1-2 | 3 |
| Klimalag. 7d | (Note) | 2 | 1 | 3 | 2 | 2 | 4-5 |

### B) Prüfung als Bindemittel für Korkschnitzel:

In einem Taumelmischer wurden zu 15g Korkschnitzel (Schüttdichte 65g/l, mittlere Größe: 2 mm) 2,5 g der 46,5 %igen der Bindemittel-Zusammensetzung aus Beispiel 8 zugegeben. Die mit Bindemittel imprägnierten Korkschnitzel wurden in einer 15 x 15 cm großen Form 3 min bei 190 °C und einem Pressdruck von 1,5 N/mm² zu Platten von 2 mm Dicke verpresst.

Die Wasseraufnahme der Platte nach 24 stündiger Lagerung in Wasser betrug 50 %, ihre Dickenquellung 12 %.

### C) Prüfung als Bindemittel für feinteilige mineralische Materialien sowie für Mineral- und Glasfasern

300 g Quarzsand H34 wurden mit Bindemittel-Zusammensetzung bei Raumtemperatur vermischt (5 Gew.-% Bindemittel trocken bezogen auf Sand). Aus der feuchten Mischung wird ein Prüfkörper (Fischer-Riegel) mit den Abmessungen 17 x 2,3 x 2,3 cm geformt und 2h bei 125 °C ausgehärtet.

Die Biegefestigkeit der so hergestellten Fischerriegel wird im trockenen Zustand bei 23 °C, 60 und 100 °C im Festigkeitsprüfapparat Typ PFG mit der Prüfvorrichtung PBV (Fa. Georg Fischer, Schaffhausen/CH) bestimmt.

Ein weiterer Fischer-Riegel wird eine Stunde in destilliertem Wasser bei 23 °C gelagert. Bestimmt wird die Biegefestigkeit im nassen Zustand bei 23 °C.

| | (N/mm2) | (N/mm2) | (N/mm2) | (N/mm2) |
|---|---|---|---|---|
| 7 | 770 | 560 | 390 | 300 |
| 9 | 930 | 550 | 345 | 250 |
| 10 | 810 | 640 | 290 | 280 |
| 11 | 660 | 610 | 620 | 230 |

### D) Prüfung als Beschichtung

Die Zusammensetzungen wurden auf einen nichtflüchtigen Anteil von 45 % verdünnt und mit einer Rakel auf eine Glasplatte aufgetragen, die Schichtdicke des nassen Films betrug 200 µm. Der Film wurde 24 h bei Raumtemperatur getrocknet. Anschließend wurden die Proben im Trockenschrank bei angegebenen Temperaturen und Zeiten ausgehärtet.

Die Pendelhärte wurde nach König (DIN 53157) mit einem Pendelhärtegerät Labotron 5852 der Fa. Byk Mallinckrodt GmbH bestimmt.

| | Vernetzungszeit in min | Härtungstemperatur 100 °C Pendelhärte in sec | Härtungstemperatur 150 °C Pendelhärte in sec |
|---|---|---|---|
| Beispiel 4 | 0 | 39 | 39 |
| | 5 | 39 | 59 |
| | 10 | 43 | 157 |
| | 20 | 49 | 192 |
| Beispiel 5 | 0 | 25 | 25 |
| | 5 | 35 | 147 |
| | 10 | 52 | 155 |
| | 20 | 84 | 179 |

## Patentansprüche

1. Thermisch härtbare, wässrige Zusammensetzung, enthaltend mindestens ein Polymerisat (A1), das 0 bis 5 Gew.-% einer α,β-ethylenisch ungesättigten Mono- oder Dicarbonsäure einpolymerisiert enthält und das erhältlich ist durch radikalische Polymerisation in Gegenwart von
a) wenigstens einem durch radikalische Polymerisation erhältlichen Polymerisat (A2), das 15 bis 100 Gew.-% einer α,β-ethylenisch ungesättigten Mono- oder Dicarbonsäure einpolymerisiert enthält, und
b) wenigstens einem Amin, das mindestens eine lange Kette mit wenigstens sechs Kohlenstoffatomen umfasst,
wobei das Gewichtsverhältnis (auf Feststoffbasis) von Polymerisat (A1) zu Polymerisat (A2) im Bereich von 7:1 bis 1:7 und das Gewichtsverhältnis von Polymerisat (A2) zu Amin mit langer Kette im Bereich von 20:1 zu 2:1 liegt.

2. Zusammensetzung nach Anspruch 1, wobei das Polymerisat (A1) eine α,β-ethylenisch ungesättigte C₃-C₆-Mono- oder Dicarbonsäure, insbesondere Acrylsäure oder Methacrylsäure, einpolymerisiert enthält.

3. Zusammensetzung nach Anspruch 1 oder 2, wobei das Polymerisat (A1) als Hauptmonomer einen Ester der Acrylsäure oder Methacrylsäure mit einem C₁-C₁₂-Alkanol, eine vinylaromatische Verbindung, einen Vinylester einer C₂-C₁₂-Monocarbonsäure oder einen C₁-C₁₂-Alkylvinylether einpolymerisiert enthält.

4. Zusammensetzung nach einem der vorhergehenden Ansprüche, wobei das Polymerisat (A2) 20 -100 Gew.-%, insbesondere 40 bis 100 Gew.-% der Mono- oder Dicarbonsäure einpolymerisiert enthält.

5. Zusammensetzung nach einem der vorhergehenden Ansprüche,
wobei das Polymerisat (A2) als Mono- oder Dicarbonsäure mindestens eine Verbindung einpolymerisiert enthält, die ausgewählt ist unter Acrylsäure, Methacrylsäure, Crotonsäure, Fumarsäure, Maleinsäure, 2-Methylmaleinsäure und Itaconsäure.

6. Zusammensetzung nach einem der vorhergehenden Ansprüche,
wobei das Polymerisat (A2) andere ethylenisch ungesättigte Monomere einpolymerisiert enthält, die ausgewählt sind unter Estern der (Meth)acrylsäure mit C₁-C₁₂-Monoalkoholen oder - Dialkoholen, vinylaromatischen Verbindungen, Butadien, Vinylestern von aliphatischen C₂-C₁₂-Monocarbonsäuren, C₁-C₁₂-Alkylvinylethern, (Meth)acrylnitril, (Meth)acrylamid, N-C₁-C₆-Alkyl(meth)acrylamiden und N,N-Di-C₁-C₆-Alkyl(meth)-acrylamiden.

7. Zusammensetzung nach einem der vorhergehenden Ansprüche, wobei das Amin mit langer Kette ausgewählt ist unter Verbindungen der Formel
R^{x}NR^{y}R^{z}
worin R^{x} für C₆-C₂₂-Alkyl, C₆-C₂₂-Alkenyl, Aryl-C₆-C₂₂-Alkyl oder Aryl-C₆-C₂₂-Alkenyl steht, wobei der Alkenylrest 1 bis 3 Doppelbindungen aufweisen kann,
R^{y} und R^{z}, die gleich oder verschieden sein können, für H, (̵CH₂CH₂O)̵ₙH, wobei n für 1 bis 25 steht, oder C₁-C₄ Alkyl oder C₅-C₇-Cycloalkyl stehen, das gegebenenfalls durch wenigstens eine Hydroxylgruppe substituiert ist, oder die für R^{x} angegebenen Bedeutungen besitzen oder zusammen für einen 5- bis 7-gliedrigen Ring stehen, der gegebenenfalls wenigstens ein weiteres Heteroatom aufweisen kann, das ausgewählt ist unter O, N und S.

8. Zusammensetzung nach Anspruch 7, wobei R^{x} für C₆-C₂₂-Alkyl oder C₆-C₂₂-Alkenyl steht und R^{y} und R^{z}, die gleich oder verschieden sind, für H oder (̵CH₂CH₂O)̵ₙH stehen.

9. Zusammensetzung nach einem der vorhergehenden Ansprüche, die zusätzlich mindestens ein Alkanolamin mit wenigstens zwei Hydroxylgruppen enthält.

10. Zusammensetzung nach Anspruch 9, wobei das Alkanolamin ausgewählt ist unter Diethanolamin, Triethanolamin und wasserlöslichen, linearen oder verzweigten aliphatischen Verbindungen, die pro Molekül wenigstens zwei funktionelle Aminogruppen vom Typ (a) oder vom Typ (b) 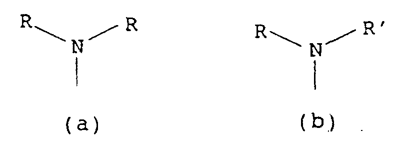 worin R für Hydroxyalkyl steht und R' für Alkyl steht, enthalten.

11. Zusammensetzung nach Anspruch 10, wobei man als Alkanolamin mindestens eine Verbindung der Formel I 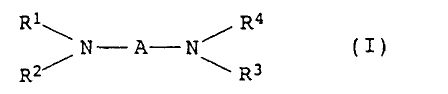 worin
A für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht, und R¹, R² und R³ und R⁴ unabhängig voneinander für H, Hydroxyalkyl, Alkyl oder Cycloalkyl stehen, einsetzt.

12. Zusammensetzung nach Anspruch 11, wobei das Alkanolamin ausgewählt ist unter mindestens einer Verbindung der Formel Ia: 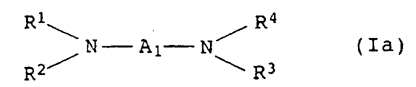 worin
A₁ für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
R¹, R², R³ und R⁴ unabhängig voneinander für Hydroxyalkyl oder H stehen oder einer der Reste R¹ und R² und/oder einer der Reste R³ und R⁴ für Alkyl oder Cycloalkyl steht.

13. Zusammensetzung nach Anspruch 11, wobei das Alkanolamin ausgewählt ist unter mindestens einer Verbindung der Formel Ib: 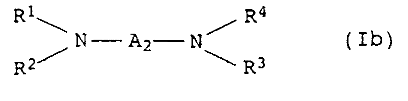 worin
A₂ für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
R¹, R², R³ und R⁴ unabhängig voneinander für Hydroxyalkyl oder H stehen.

14. Zusammensetzung nach Anspruch 11, wobei das Alkanolamin ausgewählt ist unter mindestens einer Verbindung der Formel Ic: 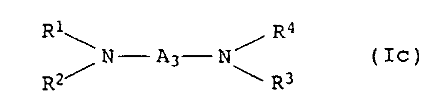 worin
A₃ für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
R¹, R², R³ und R⁴ unabhängig voneinander für Alkyl stehen, das gegebenenfalls durch mindestens eine NR⁵-Gruppe unterbrochen und/oder durch mindestens eine NR⁶R⁷-Gruppe substituiert ist,
R⁵ für H, Hydroxyalkyl oder -R⁸NR⁶R⁷ steht,
R⁶ und R⁷ unabhängig voneinander für H, Hydroxyalkyl oder -R⁸NR⁶R⁷ stehen und
R⁸ für einen Ethylen- oder Propylenrest steht,
wobei (durchschnittlich) wenigstens 30% der N-Atome eine Hydroxyalkylgruppe tragen.

15. Zusammensetzung nach Anspruch 14, wobei es sich bei dem Alkanolamin um ein Umsetzungsprodukt eines Polyethylenimins mit Ethylenoxid handelt.

16. Zusammensetzung nach einem der Ansprüche 9 bis 15, wobei es sich bei der Hydroxyalkylgruppe des Alkanolamins in den obigen Definitionen um eine Hydroxypropyl- oder Hydroxyethylgruppe handelt.

17. Zusammensetzung nach einem der vorhergehenden Ansprüche,
wobei das Gewichtsverhältnis von Polymerisat (A2) zu Alkanolamin im Bereich von 100:1 bis 1:1 liegt.

18. Zusammensetzung nach einem der vorhergehenden Ansprüche, die zusätzlich einen Reaktionsbeschleuniger enthält.

19. Bindemittel, umfassend eine Zusammensetzung nach einem der Ansprüche 1 bis 18.

20. Formkörper, erhältlich durch Imprägnieren eines Substrates mit einer Zusammensetzung nach einem der Ansprüche 1 bis 18 bzw. einem Bindemittel nach Anspruch 19 und Aushärten des imprägnierten Substrats.

21. Formkörper nach Anspruch 20, wobei es sich um Platten oder Formteile aus feinteiligen Materialien, insbesondere Spanplatten und Faserplatten, Autoinnenverkleidungen, Dämmstoffe oder Faservliese handelt.

22. Verwendung einer thermisch härtbaren, wässrigen Zusammensetzung nach einem der Ansprüche 1 bis 18 als Bindemittel für Formkörper aus feinteiligen Materialien, insbesondere aus Fasern, Spänen oder Schnitzeln.

## Claims

1. A heat-curable aqueous composition comprising at least one polymer (A1), which contains from 0 to 5% by weight of an α,β-ethylenically unsaturated mono- or dicarboxylic acid in copolymerized form and which is obtainable by free-radical polymerization in the presence of
a) at least one polymer (A2) obtainable by free-radical polymerization and containing from 15 to 100% by weight of an α,β-ethylenically unsaturated mono- or dicarboxylic acid in copolymerized form, and
b) at least one amine comprising at least one long chain having at least six carbons,
the weight ratio (based on solids) of polymer (A1) to polymer (A2) being from 7:1 to 1:7 and that of polymer (A2) to long-chain amine being from 20:1 to 2:1.

2. A composition as claimed in claim 1, where the polymer (A1) comprises in copolymerized form an α,β-ethylenically unsaturated C₃-C₆ mono- or dicarboxylic acid, especially acrylic or methacrylic acid.

3. A composition as claimed in claim 1 or 2, where the polymer (A1) comprises in copolymerized form as principal monomer an ester of acrylic or methacrylic acid with a C₁-C₁₂-alkanol, a vinylaromatic compound, a vinyl ester of a C₂-C₁₂ monocarboxylic acid, or a C₁-C₁₂-alkyl vinyl ether.

4. A composition as claimed in any of the preceding claims,
where the polymer (A2) comprises in copolymerized form from 20 to 100% by weight, in particular from 40 to 100% by weight, of the mono- or dicarboxylic acid.

5. A composition as claimed in any of the preceding claims,
where the polymer (A2) comprises in copolymerized form as mono- or dicarboxylic acid at least one compound selected from acrylic, methacrylic, crotonic, fumaric, maleic, 2-methylmaleic and itaconic acids.

6. A composition as claimed in any of the preceding claims,
where the polymer (A2) comprises in copolymerized form other ethylenically unsaturated monomers selected from esters of (meth)acrylic acid with C₁-C₁₂ monoalcohols or dialcohols, vinylaromatic compounds, butadiene, vinyl esters of aliphatic C₂-C₁₂ monocarboxylic acids, C₁-C₁₂-alkyl vinyl ethers, (meth)acrylonitrile, (meth)acrylamide, N-C₁-C₆-alkyl(meth)acrylamides and N,N-di-C₁-C₆-alkyl(meth)acrylamides.

7. A composition as claimed in any of the preceding claims,
where the long-chain amine is selected from compounds of the formula
R^{x}NR^{y}R^{z}
where R^{x} is C₆-C₂₂-alkyl, C₆-C₂₂-alkenyl, aryl-C₆-C₂₂-alkyl or aryl-C₆-C₂₂-alkenyl and the alkenyl can have 1 to 3 double bonds,
R^{y} and R^{z}, which may be identical or different, are H, (̵CH₂CH₂O)̵ₙH, where n is 1 to 25, or C₁-C₄-alkyl or C₅-C₇-cycloalkyl which is unsubstituted or substituted by at least one hydroxyl, or are as defined for R^{x} or together are a 5- to 7-membered ring which may contain at least one further heteroatom selected from O, N and S.

8. A composition as claimed in claim 7, where R^{x} is C₆-C₂₂-alkyl or C₆-C₂₂-alkenyl and R^{y} and R^{z}, are identical or different and are H or (̵CH₂CH₂O)̵ₙH.

9. A composition as claimed in any of the preceding claims, which additionally comprises at least one alkanolamine having at least two hydroxyls.

10. A composition as claimed in claim 9, where the alkanolamine is selected from diethanolamine, triethanolamine and water-soluble, linear or branched aliphatic compounds which comprise per molecule at least two functional amino groups of type (a) or (b) 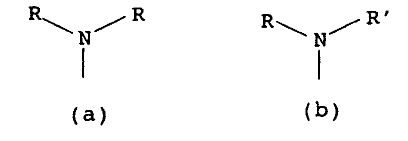 where R is hydroxyalkyl and R' is alkyl.

11. A composition as claimed in claim 10, where the alkanolamine employed comprises at least one compound of the formula I 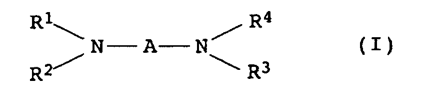 where
A is C₂-C₁₈-alkylene which is unsubstituted or substituted by one or more groups selected independently from alkyl, hydroxyalkyl, cycloalkyl, OH and NR⁶R⁷, where R⁶ and R⁷ independently are H, hydroxyalkyl or alkyl, and uninterrupted or interrupted by one or more oxygens and/or NR⁵ groups, where R⁵ is H, hydroxyalkyl, (CH₂)ₙNR⁶R⁷, where n is 2 to 5 and R⁶ and R⁷ are as defined above, or alkyl, which in turn may be interrupted by one or more NR⁵ groups where R⁵ is as defined above and/or may be substituted by one or more NR⁶R⁷ groups where R⁶ and R⁷ are as defined above, and R¹, R² and R³ and R⁴ independently are H, hydroxyalkyl, alkyl or cycloalkyl.

12. A composition as claimed in claim 11, where the alkanolamine is selected from at least one compound of the formula Ia: 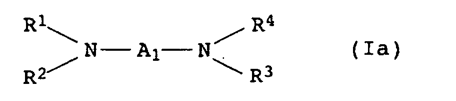 where
A₁ is C₂-C₁₂-alkylene which is unsubstituted or substituted by at least one alkyl and/or at least one NR⁶R⁷ group where R⁶ and R⁷ independently are alkyl or hydroxyalkyl, and
R¹, R², R³ and R⁴ independently are hydroxyalkyl or H, or one of R¹ and R² and/or one of R³ and R⁴ is alkyl or cycloalkyl.

13. A composition as claimed in claim 11, where the alkanolamine is selected from at least one compound of the formula Ib: 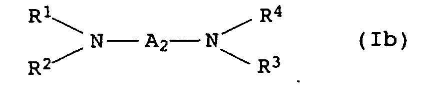 where
A₂ is C₂-C₈-alkylene which is interrupted by at least one group NR⁵ where R⁵ (or each R⁵ independently) is hydroxyalkyl or alkyl, and
R¹, R², R³ and R⁴ independently are hydroxyalkyl or H.

14. A composition as claimed in claim 11, where the alkanolamine is selected from at least one compound of the formula Ic: 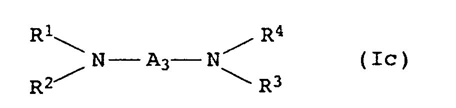 where
A₃ is C₂-C₈-alkylene which is interrupted by at least one group NR⁵ where R⁵ is H, hydroxyalkyl or CH₂CH₂NR⁶R⁷,
R¹, R², R³ and R⁴ independently are alkyl which is uninterrupted or interrupted by at least one group NR⁵ and/or unsubstituted or substituted by at least one group NR⁶R⁷,
R⁵ is H, hydroxyalkyl or -R⁸NR⁶R⁷,
R⁶ and R⁷ independently are H, hydroxyalkyl or -R⁸NR⁶R⁷, and
R⁸ is an ethylene or propylene radical,
and where (on average) at least 30% of the nitrogens carry a hydroxyalkyl.

15. A composition as claimed in claim 14, where the alkanolamine is a reaction product of a polyethyleneimine with ethylene oxide.

16. A composition as claimed in any of claims 9 to 15, where the hydroxyalkyl group of the alkanolamine in the above definitions is hydroxypropyl or hydroxyethyl.

17. A composition as claimed in any of the preceding claims, where the weight ratio of polymer (A2) to alkanolamine is from 100:1 to 1:1.

18. A composition as claimed in any of the preceding claims, which additionally comprises a reaction accelerator.

19. A binder comprising a composition as claimed in any of claims 1 to 18.

20. A shaped article obtainable by impregnating a substrate with a composition as claimed in any of claims 1 to 18 or with a binder as claimed in claim 19 and curing the impregnated substrate.

21. A shaped article as claimed in claim 20, which is a sheet or molding formed from finely divided materials, especially chipboard and fiberboard, a car interior lining, an insulating material or a fiber web.

22. The use of a thermally curable, aqueous composition as claimed in any of claims 1 to 18 as a binder for shaped articles formed from finely divided materials, especially from fibers, chips or slivers.

## Revendications

1. Composition aqueuse thermodurcissable, contenant au moins un polymère (A1) qui contient, sous forme polymérisée, 0% à 5% en poids d'un acide mono- ou di-carboxylique à insaturation α,β-éthylénique et que l'on peut obtenir par polymérisation radicalaire en présence
a) d'au moins un polymère (A2) pouvant être obtenu par polymérisation radicalaire qui contient, sous forme polymérisée, 15% à 100% en poids d'un acide mono- ou di-carboxylique à insaturation α,β-éthylénique, et
b) d'au moins une amine qui contient une longue chaîne présentant au moins six atomes de carbone,
le rapport pondéral (dans la matière solide) du polymère (A1) au polymère (A2) allant de 7:1 à 1:7 et le rapport pondéral du polymère (A2) à l'amine contenant une longue chaîne allant de 20:1 à 2:1.

2. Composition selon la revendication 1, dans laquelle le polymère (A1) contient, sous forme polymérisée, un acide mono- ou di-carboxylique en C₃ à C₆ à insaturation α,β-éthylénique, en particulier de l'acide acrylique ou de l'acide méthacrylique.

3. Composition selon la revendication 1 ou 2, dans laquelle le polymère (A1) contient, sous forme polymérisée, en tant que monomère principal, un ester de l'acide acrylique ou de l'acide méthacrylique avec un alcanol en C₁ à C₁₂, un composé vinylaromatique, un ester vinylique d'un acide monocarboxylique en C₂ à C₁₂ ou un éther (alkyle C₁ à C₁₂)vinylique.

4. Composition selon l'une quelconque des revendications précédentes, dans laquelle le polymère (A2) contient, sous forme polymérisée, 20% à 100% en poids, en particulier 40% à 100% en poids de l'acide mono- ou di-carboxylique.

5. Composition selon l'une quelconque des revendications précédentes, dans laquelle le polymère (A2) contient, sous forme polymérisée, en tant qu'acide mono- ou di-carboxylique, au moins un composé qui est choisi parmi l'acide acrylique, l'acide méthacrylique, l'acide crotonique, l'acide fumarique, l'acide maléique, l'acide 2-méthylmaléique et l'acide itaconique.

6. Composition selon l'une quelconque des revendications précédentes, dans laquelle le polymère (A2) contient d'autres monomères à insaturation éthylénique, choisis parmi les esters d'acide (méth)acrylique avec des monoalcools ou des diols en C₁ à C₁₂, des composés vinylaromatiques, le butadiène, les esters vinyliques d'acides monocarboxyliques aliphatiques en C₂ à C₁₂, les éthers (alkyle en C₁ à C₁₂)vinyliques, le (méth)acrylonitrile, le (méth)acrylamide, les N-(alkyle en C₁ à C₆)(méth)acrylamides et les N,N-Di-(alkyle en C₁ à C₆) (méth)acrylamides.

7. Composition selon l'une quelconque des revendications précédentes, dans laquelle l'amine contenant une longue chaîne est choisie parmi des composés de formule
R^{x}NR^{y}R^{z}
dans laquelle
R^{x} représente un groupe alkyle en C₆ à C₂₂, alcényle en C₆ à C₂₂, aryle(alkyle en C₆ à C₂₂) ou aryle(alcényle en C₆ à C₂₂), le groupe alcényle pouvant présenter 1 à 3 doubles liaisons,
R^{y} et R^{z}, qui peuvent être identiques ou différents, représentent un atome d'hydrogène, -(CH₂CH₂O)-ₙH, où n vaut 1 à 25, ou un groupe alkyle en C₁ à C₄ ou cycloalkyle en C₅ à C₇, qui est éventuellement substitué par au moins un groupe hydroxyle, ou qui ont les significations données pour R^{x} ou qui représentent ensemble un cycle de 5 à 7 éléments, qui peut éventuellement présenter au moins un autre hétéroatome qui est choisi parmi O, N et S.

8. Composition selon la revendication 7, dans laquelle R^{x} représente un groupe alkyle en C₆ à C₂₂ ou alcényle en C₆ à C₂₂ et R^{y} et R^{z}, qui peuvent être identiques ou différents, représentent un atome d'hydrogène ou -(CH₂CH₂O)-ₙH.

9. Composition selon l'une quelconque des revendications précédentes, qui contient en outre au moins une alcanolamine contenant au moins deux groupes hydroxyle.

10. Composition selon la revendication 9, dans laquelle l'alcanolamine est choisie parmi la diéthanolamine, la triéthanolamine et des composés aliphatiques linéaires ou ramifiés hydrosolubles qui contiennent, par molécule, aux moins deux groupes fonctionnels amino du type (a) ou du type (b) 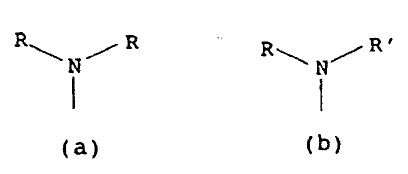 où R représente un groupe hydroxyalkyle et R' représente un groupe alkyle.

11. Composition selon la revendication 10, dans laquelle on met en oeuvre, en tant qu'alcanolamine, au moins un composé de formule I 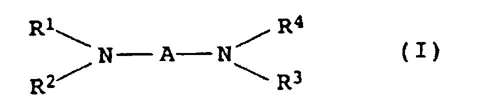 dans laquelle
A représente un groupe alkylène en C₂ à C₁₈, qui est éventuellement substitué par un ou plusieurs groupes qui sont choisis, indépendamment les uns des autres, parmi un groupe alkyle, hydroxyalkyle, cycloalkyle, OH et NR⁶R⁷, où R⁶ et R⁷ représentent, indépendamment l'un de l'autre, un atome d'hydrogène, un groupe hydroxyalkyle ou alkyle, et qui est éventuellement interrompu par un ou plusieurs atomes d'oxygène et/ou groupes NR⁵, où R⁵ représente un atome d'hydrogène, un groupe hydroxyalkyle, (CH₂)ₙNR⁶R⁷, où n vaut 2 à 5 et R⁶ et R⁷ ont les significations susmentionnées, ou un groupe alkyle qui peut de son côté être interrompu par un ou plusieurs groupes NR⁵, où R⁵ a les significations susmentionnées, et/ou substitué par un ou plusieurs groupes NR⁶R⁷, où R⁶ et R⁷ ont les significations susmentionnées, et R¹, R² et R³ et R⁴ représentent, indépendamment les uns des autres, un atome d'hydrogène H, un groupe hydroxyalkyle, un groupe alkyle ou cycloalkyle.

12. Composition selon la revendication 11, dans laquelle l'alcanolamine est choisie parmi au moins un composé de formule Ia : 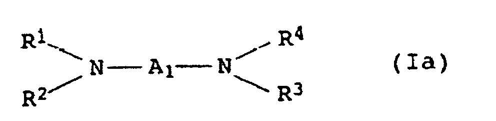 dans laquelle
A₁ représente un groupe alkylène en C₂ à C₁₂, qui est éventuellement substitué par au moins un groupe alkyle et/ou au moins un groupe NR⁶R⁷, où R⁶ et R⁷ représentent, indépendamment l'un de l'autre, un groupe alkyle ou hydroxyalkyle et
R¹, R², R³ et R⁴ représentent, indépendamment les uns des autres, un groupe hydroxyalkyle ou un atome d'hydrogène ou l'un des groupes R¹ et R² et/ou l'un des groupes R³ et R⁴ représente un groupe alkyle ou cycloalkyle.

13. Composition selon la revendication 11, dans laquelle l'alcanolamine est choisie parmi au moins un composé de formule Ib : 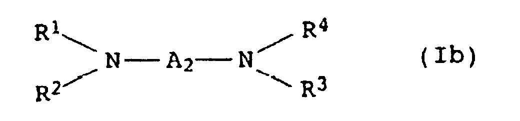 dans laquelle
A₂ représente un groupe alkylène en C₂ à C₈, qui est interrompu par au moins un groupe NR⁵, où R⁵ (ou les groupes R⁵ indépendamment les uns des autres) représente un groupe hydroxyalkyle ou alkyle et
R¹, R², R³ et R⁴ représentent, indépendamment les uns des autres, un groupe hydroxyalkyle ou un atome d'hydrogène.

14. Composition selon la revendication 11, dans laquelle l'alcanolamine est choisie parmi au moins un composé de formule Ic : 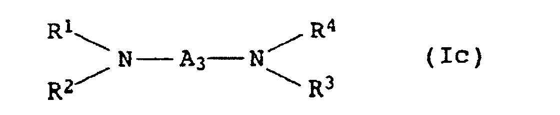 dans laquelle
A₃ représente un groupe alkylène en C₂ à C₈, qui est interrompu par au moins un groupe NR⁵, où R⁵ représente un atome d'hydrogène, un groupe hydroxyalkyle ou CH₂CH₂NR⁶R⁷,
R¹, R², R³ et R⁴ représentent, indépendamment les uns des autres, un groupe alkyle, qui est éventuellement interrompu par au moins un groupe NR⁵ et/ou substitué par au moins un groupe NR⁶R⁷,
R⁵ représente un atome d'hydrogène, un groupe hydroxyalkyle ou -R⁸NR⁶R⁷,
R⁶ et R⁷ représentent, indépendamment l'un de l'autre, un atome d'hydrogène, un groupe hydroxyalkyle ou -R⁸NR⁶R⁷ et
R⁸ représente un groupe éthylène ou propylène,
au moins 30% (en moyenne) des atomes d'azote portant un groupe hydroxyalkyle.

15. Composition selon la revendication 14, dans laquelle l'alcanolamine est un produit de la réaction d'une polyéthylèneimine avec l'oxyde d'éthylène.

16. Composition selon l'une quelconque des revendications 9 à 15, dans laquelle le groupe hydroxyle de l'alcanolamine dans les définitions ci-dessus est un groupe hydroxypropyle ou hydroxyéthyle.

17. Composition selon l'une quelconque des revendications précédentes, dans laquelle le rapport pondéral du polymère (A2) à l'alcanolamine va de 100:1 à 1:1.

18. Composition selon l'une quelconque des revendications précédentes, qui contient en outre un accélérateur de réaction.

19. Liant, contenant une composition selon l'une quelconque des revendications 1 à 18.

20. Corps moulé pouvant être obtenu en imprégnant un substrat avec une composition selon l'une quelconque des revendications 1 à 18 ou un liant selon la revendication 19 et en durcissant le substrat imprégné.

21. Corps moulé selon la revendication, pour lequel il s'agit de panneaux ou de pièces moulées à base de matières finement divisées, en particulier de panneaux de particules et de panneaux de fibres, d'habillages intérieurs d'automobiles, de matériaux isolants ou de tissus fibreux.

22. Utilisation d'une composition aqueuse thermodurcissable selon l'une quelconque des revendications 1 à 18 en tant que liant pour des corps moulés à base de matières finement divisées, en particulier à base de fibres, de copeaux ou de rognures.
